# EUROPEAN PATENT SPECIFICATION

(11) **EP 2 585 992 B1**
(45) Date of publication and mention of the grant of the patent: **24.07.2019**
(21) Application number: 11798528.3
(22) Date of filing: 18.03.2011
(51) Int. Cl.: G06Q 30/00, G06Q 30/02

(54) **CONTROLLING COUPON PRINTING USING A DELEGATED IMAGE CLIENT**
STEUERUNG EINES COUPONDRUCKS MITHILFE EINES DELEGIERTEN BILD-CLIENTS
COMMANDE D'IMPRESSION DE COUPONS À L'AIDE D'UN CLIENT D'IMAGE DÉLÉGUÉ

(30) Priority: 22.06.2010 US 821095; 22.06.2010 US 821096
(43) Date of publication of application: 01.05.2013
(73) Proprietor: Quotient Technology Inc., Mountain View, CA 94043 (US)
(72) Inventor: WALSH, Michael, San Francisco California 94110 (US)
(74) Representative: Eisenführ Speiser
(86) International application number: PCT/US2011/029074
(87) International publication number: WO 2011/162839

(56) References cited:
- WO-A1-2007/059295
- JP-A- 2007 287 067
- JP-A- 2009 169 766
- KR-A- 20090 052 846
- US-A- 6 075 971
- US-A1- 2008 215 438
- US-B1- 6 795 205

## Description

### TECHNICAL FIELD

Embodiments generally relate to coupon distribution, and, more specifically, to techniques for monitoring and controlling the printing of distributed coupons.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. A known approach is disclosed in US2008/0215438 A1.

Coupon providers rely upon a variety of mechanisms to distribute coupons to end users. Some mechanisms involve distribution of digital coupon data from a server to client software at an end-user computing device, such as a web browser. The digital coupon data describes a printable coupon. For example, the digital coupon data may include a digital image of the coupon. The digital coupon data is used to generate a redeemable copy of the coupon. For instance, the end user may instruct the computing device to generate the coupon described by the digital coupon data by, for instance, printing it at a printer coupled to the end-user computing device.

Coupon providers may distribute a coupon to end users in a "campaign." Each campaign is defined by one or more parameters, such as one or more time periods during which the coupon should be distributed, a target number of copies of the coupon to generate and distribute, a maximum number of coupons to generate and distribute for a campaign (hereinafter referred to as a "aggregate print limit"), demographics of the intended recipients of the generated coupons, a number of copies of the coupon that may be distributed to any single individual, household, device, or entity (e.g. "per-device" or "per-client print limits"), and so on. Coupon providers often outsource a campaign to one or more coupon distributors that are capable of more efficiently distributing the coupon. However, a coupon provider may also function as a coupon distributor.

Some mechanisms for distributing coupons present a number of challenges. For example, while coupon providers often prefer to limit the number of times a given coupon offer may be redeemed, it is difficult to control the distribution of digital coupon images once they have been downloaded by a web browser. Thus, digital coupon images downloaded to a browser are often printed by their intended recipient(s) more times than the coupon provider would permit, or are shared with individuals other than their intended recipient(s) via email and/or other file sharing mechanisms. It is also difficult to prevent or deter the unauthorized reproduction of printed coupons. These and other factors make it difficult for a coupon provider to control the number of times a given coupon offer may be redeemed. Moreover, these and other factors make it difficult for a coupon provider to obtain useful statistics about the distribution of their coupons, such as demographical information or redemption rates.

Another of the many challenges involved in coupon distribution is ensuring that an end user can obtain a coupon as quickly and efficiently as possible, in a manner that maximizes the likelihood that the end user will utilize the coupon, in any of a variety of contexts in which an end user may find it useful or efficient to obtain a coupon.

### BRIEF DESCRIPTION OF THE DRAWINGS

In the drawings:
FIG. 1 illustrates an example computer system for coupons;
FIG. 2 illustrates distributing coupons via online clients;
FIG. 3 illustrates distributing coupons via offline clients;
FIG. 4 illustrates distributing coupons via an intermediary client;
FIG. 5 illustrates a method for determining whether a client is authorized; and
FIG. 6 illustrates a computer system upon which embodiments may be implemented.

### DETAILED DESCRIPTION

In the following description, for the purposes of explanation, numerous specific details are set forth in order to provide a thorough understanding of the present invention which has been defined in the independent claims. preferred embodiments are defined in the dependent claims. In other instances, well-known structures and devices are shown in block diagram form in order to avoid unnecessarily obscuring the present invention.

Embodiments are described herein according to the following outline:
- 1.0.: General Overview
- 2.0.: Structural Overview
2.1. Coupon Provider / Distributor
2.2. Coupon Distribution Server
2.3. Clients / Devices
- 3.0.: Functional Overview
3.1. On-line Printing Workflow
3.2. Off-line Printing Workflow
3.3. Intermediary Client Protocol
- 4.0.: Implementation Details
4.1. Client/Device Authentication
4.2. Determining Whether a Request is from an Authorized Client
4.3. Providing Coupon Listings
4.4. Enforcing Print Limits
4.5. Printing a Coupon
4.6. Reporting Coupon Prints
4.7. Example Coupon Data
4.8. Example Coupon Server/Client Protocol
- 5.0.: Implementation Mechanism-Hardware Overview
- 6.0.: Extensions and Alternatives

### 1.0. GENERAL OVERVIEW

Approaches, techniques, and mechanisms are disclosed for the controlled distribution of coupons to end users at a variety of computing devices. In an embodiment, a coupon distributor controls coupon distribution via a centralized coupon distribution server. The server not only distributes coupons to the various computing devices, but also tracks the number of times a coupon is generated for any given coupon offer. The server may use the coupon printing statistics it gathers to, for example, limit the number of times any given device prints a coupon for a given coupon offer, limit the total number of coupons printed for a campaign, or provide reports to the provider of the coupon.

In an embodiment, the server controls coupon distribution to any of a variety of device types, including personal computers, mobile devices, stand-alone printing devices, and in-store kiosks. The server further controls distribution of coupons to devices on one or more private networks via an intermediary client. As an example of the latter scenario, the server may distribute digital coupon data to a third-party server operated by an independent retailer. The independent retailer may then forward this digital coupon data to clients that are connected to the third-party server, such as standalone kiosks, from which coupons may then be printed. Through these and other techniques, the server enables a coupon distributor to distribute coupons to end users through a variety of channels using a single and efficient centralized system.

In an embodiment, the server maintains control over the distribution and printing of coupons at each device by distributing coupon data only to trusted clients running on the devices. Each client identifies itself by client type. A client is trusted only if it is of a client type guaranteed to implement certain safeguards, such as providing the server with a unique identifier for the device on which it is installed, securely storing any coupon data received from the server, printing a coupon only to trusted printing drivers or devices, printing a coupon for a given coupon offer only a designated number of times, and adhering to an established reporting protocol. A number of different trusted client types may exist, including user-installable software clients provided by the coupon distributor, user-installable third-party software clients that have been approved for use by the coupon distributor, embedded clients that are pre-installed by a trusted manufacturer, and custom-built software clients that have been approved by the coupon distributor.

In an embodiment, a trusted coupon client may be embedded directly in a standalone printing device, such as a web-enabled printer, that comprises at least a network interface and a networking component. The printing device may include a display for displaying data describing a plurality of coupon offers. The printing device may further include one or more input mechanisms, such as buttons or a touchscreen, whereby the printing device may receive input from a user selecting at least a first coupon offer in the plurality of coupon offers. In response to the input, the printing device sends a request over the network interface to a coupon distribution server for any coupon data necessary to provide the selected one or more coupons, such as a digital image of the coupon. The printing device then receives the coupon data from the server. The printing device then generates a printed copy of the coupon based on the coupon data received from the server.

In an embodiment, the coupon distribution server provides coupon data describing a plurality of coupon offers to an intermediary server. The intermediary server distributes the coupon data to a plurality of devices. Each device utilizes the coupon data to present coupon listings to, potentially, multiple users. Users may select one or more of the coupons listed at a device for printing. The devices send report data indicating the number of coupon prints back to the intermediary server. The intermediary server collects this data and periodically sends reports back to the coupon distribution server. In response the coupon distribution server provides the intermediary server with updated coupon data that, at least, indicates which offers in the plurality of coupon offers are no longer valid. The intermediary server then distributes the updated coupon data to the plurality of client devices.

In an embodiment, clients utilize an open protocol to communicate with the coupon distribution server. The use of an open protocol enables parties other than the coupon distributor to create software and/or embedded clients for generating coupons. For some clients, the protocol may provide that the client contacts the server each and every time a user requests the client to generate a coupon. For other clients, the protocol may provide that the client is to periodically report to the server all coupons generated by the client. In response to the report, the server may provide the client with an updated listing of available coupon offers.

In an embodiment, each client reports a device identifier to the server. The server utilizes the device identifier for enforcing print limits and/or reporting demographic information. For some client types, the server automatically permits clients reporting new device identifiers to download coupon data. For other client types, the device identifier is registered with the server prior to permitting clients with new device identifiers to download coupon data.

In some respects, coupons are a form of advertisement. Thus, many, if not all of the techniques described herein with respect to coupons are applicable to not only coupons, but also to any form of advertisement.

In other aspects, the invention encompasses computer apparatus(es) and/or one or more computer-readable media configured to carry out the foregoing steps.

In general, a coupon is a certificate that entitles its holder to accept an offer described or referenced by the coupon. The offer, also subsequently referred to as the "coupon offer," may be any type of offer, but is in general an offer by the coupon provider to provide a customer with one or more goods or services at a typically discounted price, or to provide the customer with a gift in exchange for the performance of an act, such as purchasing a good or service. In some respects, coupons may therefore be considered a form of advertisement. Thus, many, if not all of the techniques described herein with respect to coupons are applicable to not only coupons, but also to any form of advertisement.

A coupon may take many forms, including "hard copy" forms such as paper certificates that include images and/or text describing terms of the offer. "Coupon codes" alphanumeric or other codes that are associated with an offer are another example form in which coupons may be generated. Electronic forms, such as digital images and digital certificates, may also be generated. Electronic forms may be stored on a physical device belonging to a user, such as a computer hard drive or a mobile communication or storage device. Electronic forms may also be stored on devices that do not belong to the user for example, in a database belonging to a coupon distributor or a retailer. In such cases, a user may redeem the electronic coupon by presenting credentials during the checkout process, such as a smart card, identification card, and/or personal information. The credentials allow the retailer to locate the coupon in an appropriate database.

The process of the user accepting a coupon offer by purchasing, contracting, or otherwise transacting with another party shall hereinafter be referred to as "redeeming" the coupon. For example, a customer may redeem a hard copy of a coupon by handing the copy to a clerk during a purchase at a retail store. As another example, a customer may redeem an electronic coupon during an online or "brick-and-mortar" checkout process by supplying a coupon code or a customer loyalty card identifying an account with which an electronic coupon has been associated. Or the customer may display or transmit a secure digital copy of the coupon from a mobile or storage device. Coupon redemption may or may not require the redeeming party to yield their coupon. The techniques described herein are applicable to coupons in any redeemable form.

For the purpose of simplification, the word coupon may at times be used herein to refer to a coupon and/or its associated coupon offer. Moreover, the word coupon may also be used herein to refer to electronic or digital data, including text or images, that describe or reference a coupon offer. Furthermore, the word coupon may in certain contexts refer collectively to multiple copies of a single coupon. For example, the phrase "distribute a coupon" may refer to the distribution of many coupons, each associated with the same coupon offer, to many individuals or entities.

The process of distributing a coupon is often described herein with reference to the distribution of tangible, printed coupons. However, the techniques described herein may also be utilized to distribute coupons in any redeemable form that may be generated by a computing device. Thus, any step of printing a coupon described herein may be substituted with a step of generating a redeemable coupon in any form, including an electronic copy.

### 2.0. STRUCTURAL OVERVIEW

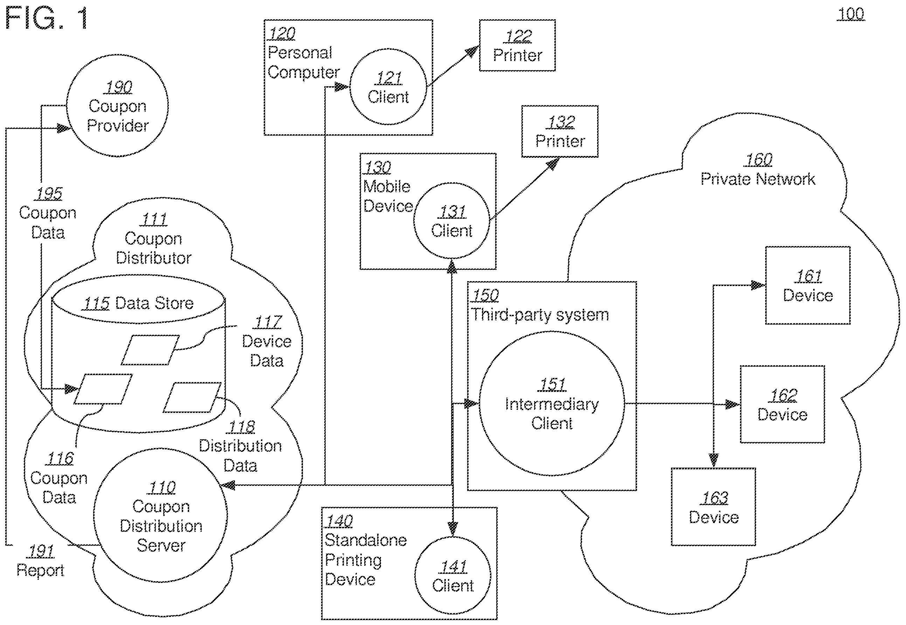

FIG. 1 illustrates an example system 100, . Other embodiments may comprise systems with more or fewer components than in FIG. 1. The scope of the tasks performed by each component may also be expanded or narrowed from system to system.

System 100 comprises a coupon distribution server 110. The coupon distribution server 110 distributes coupons on behalf of one or more coupon providers 190 to a variety of different types of computers, devices or systems, including personal computer 120, mobile device 130, standalone printing device 140, and computer 150.

Further details for each component of system 100 are illustrated and described herein.

### 2.1. COUPON PROVIDER / DISTRIBUTOR

Coupon distributor 111 distributes coupons on behalf of one or more coupon providers 190, such as manufacturers, retailers, and advertisers. For example, a coupon provider 190 may contract with coupon distributor 111 to distribute coupons as part of a coupon campaign. The coupon provider 190 supplies coupon distributor 111 with coupon distribution data 195 describing the coupon offer(s), as well as data describing parameters for the coupon campaign, such as a target number of coupons to distribute in aggregate, how many coupons may be supplied to each individual end user, or start and end dates for distribution.

Coupon providers 190 may transmit coupon distribution data 195 to coupon distributor 111 electronically via a network connecting coupon provider 190 to coupon distribution server 110. For example, coupon distribution server 110 may feature a web application, file sharing, or database access component by which providers 190 may upload coupon distribution data 195 directly to coupon distribution server 110 or its data store 115. Coupon providers 190 may also or instead transmit coupon distribution data 195 to coupon distributor 111 by any other suitable means, including orally over a telephone.

### 2.2. COUPON DISTRIBUTION SERVER

Coupon distribution server 110 is operated by a coupon distributor 111 for distributing coupons to end users operating a variety of devices. In an embodiment, a server may refer to one or more applications, executing on one or more computers or devices that interact with counterpart client applications executing on other computers or devices. Thus, coupon distribution server 110 may be one or more server applications, executing at one or more computing devices operated by coupon distributor 111 to distribute coupons to client computing devices operated by other individuals or entities. In an embodiment, coupon distribution server 111 is configured for distributing coupons to, among other clients, client 121 at personal computer 120, client 131 at mobile device 130, client 141 at standalone printing device 140, and client 151 at computer 150.

Coupon distribution server 110 may distribute coupons to a variety of different types of devices executing a variety of different types of clients. In an embodiment, coupon distribution server 110 may interact differently with each client, depending on the client type. For example, coupon distribution server 110 may behave differently with respect to each of the four client types depicted in FIG. 1. Some embodiments may include additional client types with additional variations in client-server interactions, while in other embodiments, coupon distribution server 110 may not discriminate between any client type.

Coupon distributor 111 maintains the data supplied by coupon providers 190 as coupon data 116 in data store 115, which is coupled to coupon distribution server 110. Data store 115 may comprise one or more databases and/or file repositories. Coupon data 116 may take a variety of forms, including database records and/or one or more files. Among other aspects, coupon data 116 may comprise, for each coupon offer, data such as the name of the coupon provider 190 making the coupon offer, distribution parameters (including aggregate and per-device or per-client distribution limits), terms of the coupon offer, print layout information and graphics, one or more internal or provider identification numbers, bar code generation information, one or more relevant uniform resource locators (URLs), one or more coupon names or titles, one or more related search terms, and one or more related categories.

Data store 115 may also store other information related to coupon distribution, including device data 117 and distribution logs 118. Device data 117 describes a plurality of devices, including devices 120, 130, 140, computer 150. Each device may be described by a device identifier. Device data 117 may include information such as hardware identifiers, client identifiers, demographic information, and permissions data. Distribution logs 118 track the number of coupons that have been printed for each coupon offer described in coupon data 116. Distribution logs 118 may further track how many times each device described in device data 117 has printed coupons for and/or viewed each coupon offer described in coupon data 116.

Coupon distribution server 110 receives and responds to coupon-related requests from clients 121, 131, 141, 151 over one or more networks, such as the Internet. Coupon distribution server 110 retrieves some or all of coupon data 116 to respond to various requests from clients 121, 131, 141, 151. For example, client 121, 131, 141, 151 may request coupon distribution server 110 to provide a listing of available coupons, search for a coupon based on keywords, or allow the client to print a particular coupon. In response, coupon distribution server 110 may retrieve any relevant coupon data 116 from data store 115, process the coupon data 116 as appropriate, and, based on that processing, formulate a response to the client.

For example, in an embodiment, coupon distribution server 110 may respond to a client's request to print a coupon by retrieving data such as print layout and graphics, bar code generation information, and terms of the coupon offer from data store 115. Based on the retrieved data, coupon distribution server 110 may then render an image of the coupon. Coupon distribution server 110 may send the rendered image of the coupon to the client. In an embodiment, coupon distribution server 110 sends the coupon data retrieved from data store 115 directly to the client and the client renders an image of the coupon based on the coupon data.

Coupon distribution server 110 may be configured to control distribution of coupons in a number of ways. For example, coupon distribution server 110 may be configured to deny a client permission to print the coupon, in accordance with device-based, client-based, or aggregate printing limits. Coupon distribution server 110 may also be configured to deny or ignore requests from software clients other than those provided or approved by the coupon distributor. Coupon distribution server 110 may also be configured to deny requests from software clients unless the software clients provide the server authenticable identification of the device at which they are executing, so as to enable the server to enforce device-based printing limits. Coupon distribution server 110 may further be configured to deny a client permission to print the coupon based on demographic information associated with the client.

Coupon distribution server 110 may also be configured to render an image of a coupon using techniques that make reproduction of the coupon in a usable form difficult or impossible. For instance, the server may employ fraud-protection techniques such as described in U.S. Publication No. 2008/0267500 A1, published October 30, 2008.

Coupon distribution server 110 may use distribution logs 118 for sending distribution reports 191 to coupon providers 190. The form of a report 191 may vary, and may include at least data indicating either a total number of coupons that have been distributed for a particular campaign or a total number of coupons that have been distributed for the particular campaign since the last report 191. Reports 191 may be sent at varying frequencies, and in some embodiments a report 191 may be sent each time a particular coupon is printed. Reports 191 may further include information harvested from device data 117, such as demographic information or client types of the devices to which coupons have been distributed.

### 2.3. CLIENTS / DEVICES

In an embodiment, coupon distributor 111 is able to maintain control over coupon distribution in part because coupon distribution server 110 only interacts with clients that are trusted to implement various safeguards designed to limit the possibility of unauthorized coupon replication. For example, some or all of clients 121, 131, 141, 151 may be trusted to request coupon distribution server 110 for permission to generate a coupon each time an end user requests to print the coupon. Some or all of clients 121, 131, 141, 151 may be trusted to perform some or all of: following data distribution rules imposed by the server, generating a sufficiently unique device or hardware identifier and reporting the identifier to the server for authentication purposes, encrypting any stored copies of coupon data, deleting stored copies of coupon data when the data is no longer valid, and ensuring that the coupon is only printed by trusted printing drivers or printing devices. Techniques for ensuring that clients implement a desired set of safeguards are further described herein.

In an embodiment, some or all of clients 121, 131, 141, 151 are "online" clients, in that upon a user selecting a coupon to print, the clients must obtain permission from coupon distribution server 110 to print the coupon. Thus, they must be "online," or capable of communicating either directly or indirectly with coupon distribution server 110, between the time that a user selects a coupon and the time that the coupon is printed. In an embodiment, some or all of clients 121, 131, 141, 151 are designed to function at least some of the time as "offline" clients, in that they are not required to communicate either directly or indirectly with coupon distribution server 110 between the time that a user selects a coupon and the time that the coupon is printed. Coupon distributor 111 may wish to allow clients to function in an offline mode for a variety of reasons, including server availability to the client, network reliability, network latency, and general customer convenience. Offline clients are authorized to print coupons without requesting explicit permission from coupon distribution server 111, so long as they adhere to a protocol for periodically reporting prints and refreshing coupon availability data. Online clients and offline clients are both further described herein.

Further features of each of clients 121, 131, 141, 151 are described further herein in the context of the devices they respectively execute on.

Device 120 is a personal computing device with a software client 121 configured for interfacing with coupon distribution server 110. Device 120 may be any of a variety of computing devices executing any of a variety of operating systems. Device 120 features a network interface that may be used by client 121 to interface with coupon distribution server 110. An end user may operate device 120 to print coupons from coupon providers 190. Device 120 causes the coupons to be printed to printer 122, which is coupled to device 120 via any of a wired or wireless network or direct cable connection.

Printer 122 is a printing device capable of printing a coupon to paper or any other physical medium. In an embodiment, before allowing a user to print a coupon to printer 122, client 121 verifies that printer 122 is an acceptable printer. For example, client 121 may verify that printer 122 is a hardware printing device, as opposed to a virtual printing device capable of rendering a print job as a freely-reproducible electronic document. As other examples, client 121 may analyze features supported by printer 122 to ensure that printer 122 will only allow a single printing of the coupon, or to ensure that printer 122 supports features required by the coupon, such as printing to a certain type of paper or printing in color.

To print a coupon, an end user may execute client 121 at device 120. Client 121 provides an interface, such as an application programming interface or graphical user interface, by which client 121 may receive any of a variety of forms of input that select a coupon to print. For example, a displaying application executing at device 120, such as client 121 or a web browser, may display a listing of coupons currently available from coupon distribution server 110. This listing may have been provided to the displaying application in response to the displaying application directly requesting such a listing from coupon distribution server 110, or in response to the end user browsing to a web page comprising such a listing. In response to the end user selecting a coupon from the listing, client 121 will then be activated to download (or will have already downloaded) from coupon distribution server 110 any data necessary to print the selected coupon. Based on the data downloaded from coupon distribution server 110, client 121 will then cause device 120 to output coupon print data to printer 122. Printer 122 will then print the coupon.

In other embodiments, client 121 (as well as, potentially, other clients) generates coupons in other forms in addition to or instead of hard copies printed via printer 122. For example, client 121 may be configured to generate unique electronic coupons that are stored remotely and accessible to the user via a smart card or a coupon code.

Client 121 may comprise a standalone software application or a plug-in to another application, such as a JAVA® applet or ActiveX control. Users may download and install client 121 from a web server operated by coupon distributor 111 or a third-party. Third party original equipment manufacturers may also pre-install client 121 on personal computer 120. In embodiments where the coupon listings are displayed through an application other than client 121, such as embodiments where the user accesses coupon listings via a web site using a conventional web browser, the application may be configured to download client 121 automatically in response to the user first performing various prescribed actions such as selecting a coupon for printing. For example, a user may select a coupon for printing by clicking on a link, which link causes the web browser to download and install client 121 if client 121 is not available and activate client 121 with the selected coupon as input.

Generating a coupon at device 120 is described further herein. Example embodiments of clients and computing devices similar to client 121 and personal computer 120 are described in U.S. Application Serial No. 12/274,348.

Device 130 is a mobile device that hosts a client 131 for interfacing with coupon distribution server 110. Mobile device 130 may comprise a mobile phone, book reader, navigation device, digital assistant, tablet device, or media player. Generally, mobile device 130 differs from personal computer 120 in one or more of the following respects: mobile device 130 may be powered by a battery; mobile device 130 may be designed for handheld operation; mobile device 130 may be a device that is operated by the user while shopping in brick-and-mortar retail stores. Mobile device 130 includes one or more generally wireless network interfaces by which client 131 may interface with coupon distribution server 110. Mobile device 130 may also optionally be coupled to a printer 132, much like printer 122.

In an embodiment, client 131 is a Java application, such as a Java applet. In various embodiments, 131 may be pre-installed on mobile device 130 by an original equipment manufacturer or network carrier, or client 131 may be installed by a user in a manner similar to client 121.

In an embodiment, distribution of coupons to mobile device 130 via client 131 occurs in a manner similar to the distribution of coupons to personal computer 120 via client 121. However, coupon listings at mobile device 130 may be optimized for a mobile interface, taking into account factors such as a smaller screen and a touch-screen interface.

In an embodiment, in addition to or instead of printing coupons, mobile device 130 generates electronically-redeemable coupons, as further described herein.

Device 140 is a single, standalone printing device capable of both executing a client 141 that interfaces with coupon distribution server 110 and printing coupons to paper or some other physical medium. An end user may operate printing device 140 to print coupons without having to install or interface with a coupon client on a personal computer or mobile device. Additionally, because client 141 is integrated directly into the device responsible for printing coupons, client 141 may provide coupon distribution safeguards that most other clients can only provide by performing additional and sometimes difficult steps such as verifying that the coupon print data is sent to an approved printing device and calculating a unique device signature.

Printing device 140 comprises, among other components, an integrated printing component and a wired or wireless network interface by which client 141 may communicate with coupon distribution server 110. Printing device 140 may comprise a display by which client 141 or another application may display coupon listings. Printing device 140 may comprise one or more input mechanisms, such as navigation buttons or a touchscreen, by which a user may select a coupon offer displayed in the coupon listing for printing by the printing component.

In an embodiment, client 141 is pre-installed on printing device 140 by an original equipment manufacturer. Client 141 may be a software or firmware application. For example, client 141 may be a proprietary firmware component developed by the manufacturer and embedded within printing device 140's operating system. As another example, client 141 may be a modular software component installed in printing device 140's read-only memory. Client 141 may be upgradeable via firmware upgrades or software patches. Client 141 may also be installed by an end user via, for example, an application marketplace or other installation mechanism.

In an embodiment, printing device 140 presents a menu of options to a user via a display component. Among these options is an option to browse through a coupon listing. In response to user input selecting this option, client 141 or another component of printing device 140 may then request and obtain a coupon listing from coupon distribution server 110. Alternatively, coupon distribution server 110 may already have sent a coupon listing to printing device 140. Printing device 140 then allows the user to browse through the various coupon offers in the coupon listing, using any of a variety of interfaces. In response to user input selecting a particular coupon offer, client 141 sends a request to coupon distribution server 110 to print a coupon for the selected offer. Coupon distribution server 110 then determines whether to grant the request. Coupon distribution server 110 communicates its decision to client 141 and, if necessary, sends any coupon data necessary for client 141 to print the selected coupon. Using this coupon data, client 141 then causes printing device 140's printing component to print the coupon to an appropriate medium.

In an embodiment, printing device 140 may be a kiosk accessible to multiple users in, for example, a retail store or public location. Printing device 140 may operate in an offline mode as further described herein.

In an embodiment, a coupon listing may be displayed at another device, and that device may transmit the user's selection of a coupon offer from that listing to client 141. Client 141 may then send a request to coupon distribution server 110 for permission to print the selected coupon.

Computer 150 is configured as an intermediary for distributing coupons from coupon distribution server 110 to devices 161-163. Computer 150 features one or more network interfaces for communicating with coupon distribution server 110 and devices 161-163. In an embodiment, Computer 150 communicates with devices 161-163 over a private network 160, different from the network by which device 150 is connected to coupon distribution server 110. In an embodiment, devices 161-163 do not have direct access to any network by which coupon distribution server 110 is accessible.

Computer 150 may provide a variety of non-coupon related functions to devices on network 160. For example, computer 150 may be a mainframe server for a retail store, responsible for various accounting, inventory, and operation functions. Devices 161-163 may likewise provide functions other than printing coupons. For example, devices 161-163 may be in-store kiosks that provide customers with informational, ordering, and/or checkout services. In an embodiment, some or all of devices 161-163 may be personal computing devices, mobile devices, or standalone printing devices.

Computer 150 executes a coupon client 151 whose operation is in many respects similar to clients 121, 131, and 141, but with several notable differences. For example, on account of client 151 distributing coupons to multiple devices that will usually be operated by multiple, non-related users, coupon distribution server 110 may choose not to subject client 151 to per-device printing limits. Meanwhile, devices 161-163 may or may not comprise clients similar to clients 121-141, but in any event must interact with client 151, as opposed to coupon distribution server 110, to receive coupon data. Client 151 may thus be a server (or a component thereof) that provides devices 161-163 with coupon listings as well as coupon data necessary for devices 161-163 to generate coupons. Depending on the embodiment, the coupon data distributed by client 151 may include actual rendered coupon images, or simply all data necessary for devices 161-163 to render a coupon image. Devices 161-163 use the coupon listings and coupon data provided by client 151 to allow users to browse offers and print coupons.

In an embodiment, since devices 161-163 are not in constant communication with coupon distribution server 110, and may not necessarily be in constant communication with client 151, devices 161-163 are configured to operate in an offline mode. As a result, they are not required to seek permission to print a coupon in response to a user selecting an offer, but rather may immediately print a coupon for the selected offer. To allow for tracking of coupon distribution, then, devices 161-163 periodically report coupons that have been printed to client 151. However, in an embodiment, when a user selects a coupon, devices 161-163 may request permission to print coupons from client 151, which in turn may request permission from coupon distribution server 110.

In an embodiment, client 151 adheres to a data communication protocol by which client 151 periodically reports coupon prints to coupon distribution server 110 and receives, in response, updated coupon listing data. For example, coupon distribution server 110 may expect client 151 to report at fifteen minute intervals how many coupons devices 161-163 had reported printing to client 151 since client 151 last reported to coupon distribution server 110. In response, coupon distribution server 110 may determine which coupon offers are presently available (e.g. new coupon campaigns and campaigns for which prints have not surpassed the campaign's aggregate print limit). Coupon distribution server 110 then provides client 151 with a listing of coupon offers that are still available. Client 151, in turn, provides devices 161-163 with updated coupon data, thereby ensuring that devices 161-163 only allow the printing of available coupon offers.

By requiring client 151 to provide reports at an appropriate frequency, coupon distribution server 110 is able to keep its count of prints for any given coupon campaign at any given time reasonably accurate. However, because devices 161-163 may nonetheless print coupons without consulting with coupon distribution server 110, coupons may still be printed at devices 161-163 for at least some time after the aggregate print limit for a campaign has been reached. Thus, coupon distributor 111 may not be able to limit the number of coupons distributed exactly to an aggregate print limit. However, the periodic reporting of prints and refreshing of available coupons ensures that the number of excess coupons distributed will be limited to no more than the number of coupons printed during a single report cycle.

Moreover, coupon distributor 111 may mitigate some of the risk for excess coupon distribution using a variety of strategies. For example, coupon distribution server 110 may determine that a coupon is no longer available for client 151 and any other offline clients when the total number of coupons distributed reaches a pre-determined percentage of the campaign limit. Coupon distributor 111 may then rely upon distribution to online clients to fulfill the remainder of the campaign. As another example, coupon distribution server 110 may periodically allot a certain number of coupon prints to each client 151 or device 161-163, and may require that client 151 and/or each device 161-163 is designed to print no more coupons than allotted.

### 3.0. FUNCTIONAL OVERVIEW

### 3.1. ON-LINE PRINTING WORKFLOW

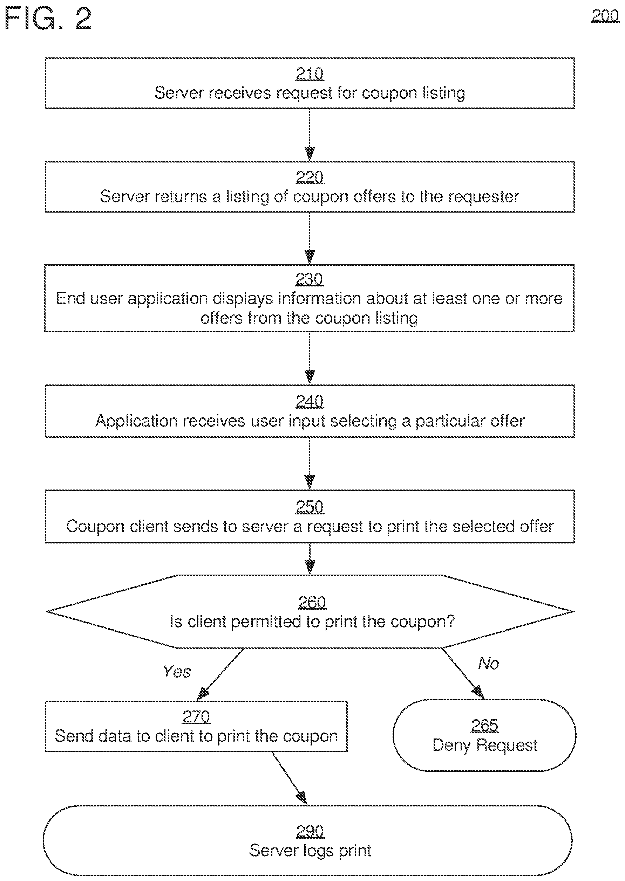

FIG. 2 illustrates distributing coupons via online clients, in an embodiment. The illustrated method is but one example of how coupons may be distributed. Other methods may comprise fewer or additional steps, performed in different orders.

At step 210, a computer server, such as coupon distribution server 110, receives a request for a coupon listing. The request may have been sent from a variety of sources. For example, the request may have been sent from an application at an end-user device, such as a web browser or a client 121, 131, 141, 151 executing at devices 120, 130, 140, or computer 150. Or, as another example, the request may have been sent from another server so that the other server may satisfy a request, from an application at an end-user device, for a web page comprising a listing of coupon offers.

In response to the request of step 210, at step 220, the server returns a coupon listing to the requestor. In an embodiment, however, the server sends the coupon listing without having ever received the request of step 210. For example, the server may be configured to periodically update certain clients. The returned coupon listing may be a complete coupon listing, or may be an incremental update to a previous coupon listing that takes into account previous interactions between the client and the server. Further details as to how a coupon distribution server may generate a coupon listing are provided in other sections of this application.

At step 230, an application at an end-user device displays to the user information about at least one or more coupon offers from the coupon listing. The information may be displayed using any of a variety of techniques. For example, offer titles and dollar amounts may be displayed by a browser within a table in a web page, or information about each of the offers may be displayed within a graphical user interface presented by a coupon print client, such as clients 121, 131, 141.

At step 240, responsive to displaying information about at least a particular offer in the coupon listing, the application receives input from a user selecting at least a particular coupon for printing. In an embodiment, the input selecting the particular coupon may be received without having performed the preceding steps. For instance, the input may be an offer code that the user saw or heard in a television or web advertisement.

At step 250, a coupon print client sends to the server a request to print the particular coupon selected in step 240. In an embodiment, the coupon print client of this step is the same as the application of step 250. In an embodiment, the application of step 240 may cause the coupon print client to perform step 250 as a result of the input of step 240. In an embodiment, if the coupon print client is not connected to the server during step 240, performance of step 250 may be delayed for some time after step 240, until the coupon print client is connected. In an embodiment, the client allows the user to select multiple coupons for printing prior to printing the coupons, in which case step 250 may or may not be performed until after the user has indicated that the user has finished selecting coupons for printing.

In response to the request, at step 260, the server determines whether to permit the coupon print client to print the particular coupon. In an embodiment, this determination is based at least on one or more of per-user, per-device, per-client, or aggregate print limits defined for the particular coupon.

If, in step 260, the server determines that the client is not permitted to print the particular coupon, then at step 265 the server optionally responds to the client indicating that the request has been denied.

If, in step 260, the server determines that the client is permitted to print the particular coupon, then at step 270 the server sends data to the client indicating that it is permitted to print the particular coupon. In an embodiment, this data includes data for the particular coupon beyond that which was included in the coupon listing, such as a rendered image of the particular coupon or any data necessary for the coupon print client to render an image of the particular coupon.

At step 280, the coupon print client causes the particular coupon to be printed. Step 280 may be performed immediately upon receiving permission to print the particular coupon, or may be delayed until, for example, the coupon print client is connected to a printing device capable of printing the particular coupon.

At step 290, which may be performed at any time after step 270, the server records the print in its logs.

### 3.2. OFF-LINE PRINTING WORKFLOW

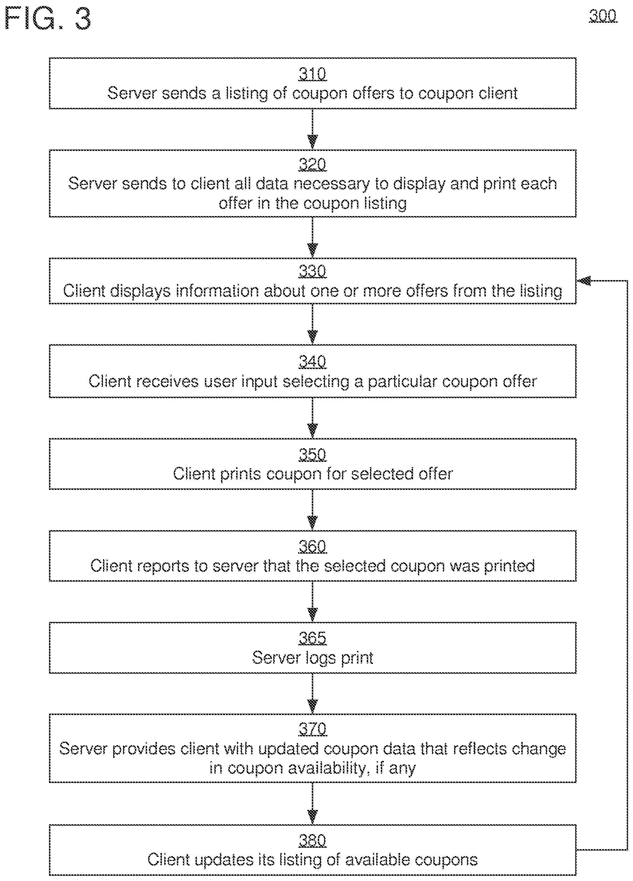

FIG. 3 illustrates distributing coupons via offline clients, In an embodiment. The illustrated method is but one example of how coupons may be distributed. Other methods may comprise fewer or additional steps, performed in different orders.

At step 310, a computer server, such as coupon distribution server 110, sends a listing of available coupon offers to a coupon print client, such as client 121, 131, 141, 151 executing at devices 120, 130, 140, or computer 150. The listing may be sent in response to a request from the client, or may be pushed to the client in an unsolicited manner. The client may have requested the listing in response to input from a user requesting a coupon listing, or the client may have requested the listing automatically, so as to periodically refresh its coupon listings.

At step 320, the server sends to the client all data necessary for the coupon print client to display and print coupons for each offer in the coupon listing. In an embodiment, for at least some client types, this data includes a rendered coupon image which may be printed directly by the coupon print client. In an embodiment, for at least some client types, this data includes any data necessary for the client to render an image of a coupon for printing, including templates, text, and graphics. Step 320 may be performed in conjunction with step 310, and indeed the data of step 320 may be integrated within the coupon listing. Step 320 may also or instead occur before and/or after step 310. Step 320 may further occur in response to one or more requests from the client for the server to provide detailed data for one or more offers in the coupon listing.

At step 330, the coupon print client displays to the user information about at least one or more coupon offers from the listing. The information may be displayed using any of a variety of techniques. For example, offer titles and terms may be displayed within a sortable table in a graphical user interface presented by the client.

At step 340, responsive to displaying information about at least a particular offer in the coupon listing, the client receives input from a user selecting at least the particular coupon for printing. In an embodiment, the input selecting the particular coupon may be received without having performed the preceding steps. For instance, the input may be an offer code that the user saw or heard in a television or web advertisement.

At step 350, in response to the input of step 340, the coupon print client prints the particular coupon, based on the data received in step 320. In an embodiment, the client allows the user to select multiple coupons for printing prior to printing the coupons, in which case step 350 may or may not be performed until after the user has indicated that the user has finished selecting coupons for printing.

At step 360, which may be performed at any time after step 340, the coupon print client reports to the server that the particular coupon was printed. For example, step 360 may be performed when the coupon print client is next connected to the same network as the server, or as part of periodic batch report of print jobs performed by the client. In the latter case, one or more repetitions of steps 330-350 may occur before performance of step 360.

At step 365, in response to the report of step 360, the server records the print in its logs. Step 365 may be performed at any time with respect to the subsequent steps.

At step 370, the server provides the client with updated coupon data that reflects changes in coupon offer availability, if any. For example, owing at least in part to one or more prints reported in step 360, the server may determine that the particular coupon offer selected in step 340 is no longer available-either in general, or specifically to the client. Step 370 may occur automatically in response to step 360, as part of a refresh process, in response to the server determining that one or more offers have become unavailable, or in response to another request from the client for a coupon listing. The updated coupon data may take a variety of forms, including a complete new listing of available coupon offers that is intended to replace the previous listing, or a listing of coupon offers that are no longer available. One or more repetitions of steps 330-365 may occur prior to performance of step 370.

At step 380, based on the updated coupon data, the client updates its listing of available coupons. Upon completion of step 380, flow returns again to step 330.

### 3.3. INTERMEDIARY CLIENT PROTOCOL

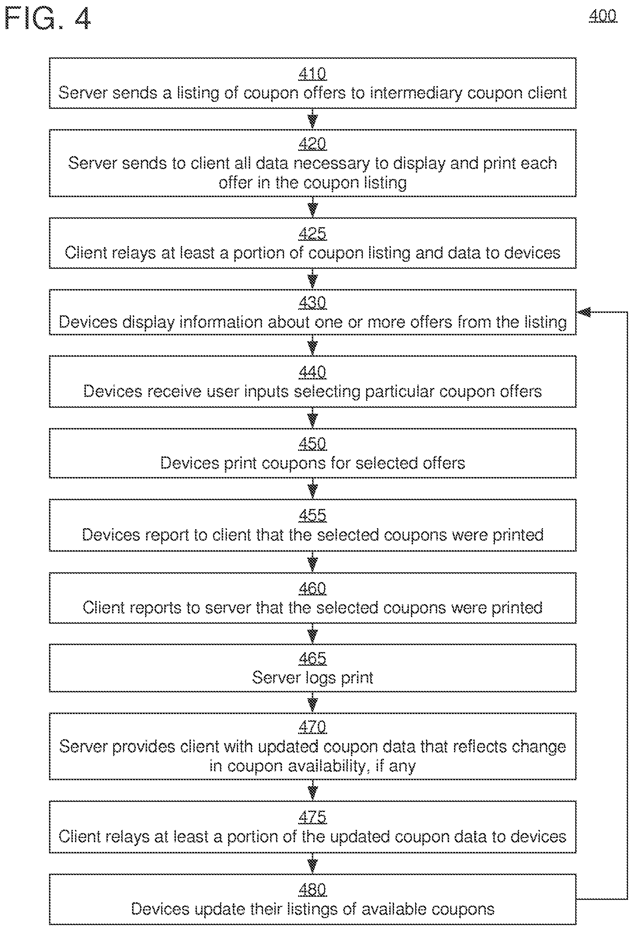

FIG. 4 illustrates distributing coupons via an intermediary client, in an embodiment. The illustrated method is but one example of how coupons may be distributed. Other methods may comprise fewer or additional steps, performed in different orders.

At step 410, a server, such as coupon distribution server 110, sends a listing of available coupons to an intermediary coupon print client, such as client 151. The listing may be sent in response to a request from the intermediary client, or may be pushed to the intermediary client in an unsolicited manner.

At step 420, the server sends to the intermediary client all data necessary for the intermediary client to display and print each coupon in the coupon listing. In an embodiment, for at least some intermediary client types, this data includes any data necessary for the client to render an image of the coupon for printing, including templates, text, and graphics. In an embodiment, for at least some intermediary client types, this data includes a rendered coupon image which may be printed directly by the coupon print client. Step 420 may be performed in conjunction with step 410, and indeed the data of step 420 may be integrated within the coupon listing. Step 420 may also or instead occur before and/or after step 410. Step 420 may further occur in response to one or more requests from the client for the server to provide detailed data for one or more offers in the coupon listing.

At step 425, the intermediary client relays at least a portion of the coupon listing received in step 410, along with at least a portion of the coupon data received in step 420, to a device, such as devices 161-163. In an embodiment, the intermediary client may filter the coupon listing and coupon data for specific devices-for example, the device may be deployed in a retail clothing outlet, and thus the intermediary client may filter the coupon listing to only include offers from a "clothing" category. In an embodiment, the intermediary client may reformat the coupon listing and/or coupon data to be compatible with a proprietary coupon browsing and printing application executing at the device. In an embodiment, the intermediary client may render printable coupon images for each coupon offer that is relayed to the device.

At step 430, the device displays to the user information about at least one or more coupon offers from the listing of available coupons. The information may be displayed using any of a variety of techniques. For example, offer titles and terms may be displayed within a sortable table in a graphical user interface presented by the client.

At step 440, responsive to displaying information about at least a particular coupon offer in the coupon listing, the device receives input from a user selecting at least the particular coupon for printing. In an embodiment, the input selecting the particular coupon may be received without having performed step 430. For instance, the input may be an offer code that the user saw or heard in a television or web advertisement.

At step 450, in response to the input of step 440, the device prints the particular coupon, based on the data received in step 425. In an embodiment, the device renders a printable image of the coupon as part of this step. In an embodiment, the device will have already received a printable image from the intermediary client or the server. In an embodiment, the client allows the user to select multiple coupons for printing prior to printing the coupons, in which case step 450 may or may not be performed until after the user has indicated that the user has finished selecting coupons for printing.

At step 455, which may be performed at any time after step 440, the device reports. to the intermediary client, that the particular coupon was printed. For example, step 455 may be performed when the device is next connected to the same network as the intermediary client, or as part of periodic batch report of print jobs performed by the device. In the latter case, one or more repetitions of steps 430-450 may occur before performance of step 455.

At step 460, which may be performed at any time after step 455, the intermediary client reports to the server that the particular coupon was printed. For example, step 455 may be performed when the intermediary client is next connected to the same network as the server, or as part of periodic batch report of print jobs performed by all devices connected to the intermediary client. In the latter case, one or more repetitions of steps 430-455 may occur before performance of step 460.

At step 465, in response to the report of step 460, the server records the print in its logs. Step 465 may be performed at any time with respect to the subsequent steps.

At step 470, the server provides the intermediary client with updated coupon data that reflects changes in coupon offer availability, if any. For example, owing at least in part to one or more prints reported in step 460, the server may determine that the particular coupon offer selected in step 440 is no longer available-either in general, or specifically to the intermediary client and any devices connected thereto. Step 470 may occur automatically in response to step 460, as part of a refresh process, in response to the server determining that one or more offers have become unavailable, or in response to another request from the client for coupon listings. The updated coupon data may take a variety of forms, including a complete new listing of available coupon offers that is intended to replace the previous listing, or a listing of coupon offers that are no longer available. One or more repetitions of steps 430-465 may occur prior to performance of step 470.

At step 475, the intermediary client relays at least a portion of the updated coupon data to the device. Again, as with step 425, the intermediary client may filter or reformat the updated coupon data, as well as render new coupon images if necessary.

At step 480, based on the updated coupon data received in step 475, the device updates its listing of available coupon offers. From step 480, flow returns again to step 430.

### 4.0. IMPLEMENTATION DETAILS

### 4.1. CLIENT/DEVICE AUTHENTICATION

### TRUSTED CLIENTS

In an embodiment, in order to assure coupon providers that unauthorized copies of distributed coupons will be substantially limited, a coupon distributor must ensure that a coupon distribution server, such as coupon distribution server 110, provides coupons only to clients that are trusted to implement reporting and control techniques such as described herein. In some embodiments, therefore, a coupon distribution server is only allowed to distribute coupons to clients that have been provided by the coupon distributor. In other embodiments, however, the coupon distribution server may be allowed to distribute coupons to clients developed by third-parties, if the coupon distributor approves the clients. For example, the coupon provider may request permission to observe the operation and/or source code for a third-party client to ensure that the client is compliant with essential protocols. In an embodiment, certain clients may automatically be trusted, while others must be approved by the coupon distributor. For example, the coupon distributor may assume that a printer manufacturer will always produce a trusted client, but may require that clients developed by retail stores be approved by the coupon distributor. In an embodiment, all clients are assumed, at least initially, to be trusted. In an embodiment, approval of a client may be revoked by the coupon distributor at any time.

### CLIENT TYPE IDENTIFICATION

In an embodiment, each client is said to belong to a "client type." Client types may be distinguished by one or more factors, including development platform, operating system, target device type, and client vendor. Rather than approve each and every client individually, a coupon distributor may approve entire sets of clients by approving a client type. Then, prior to distributing a coupon to a client, or even prior to responding to any message from the client, the coupon distribution server may verify that the client belongs to an approved client type.

Each client type is assigned a client type identifier. In an embodiment, the coupon distributor assigns the client type identifier. The client type identifier may be, for example, an alphanumerical string. In an embodiment, part of the client type identifier is assigned by the coupon distributor, while another part of the client type identifier is selected by the developer of the client. In an embodiment, the client type identifier is of sufficient length and complexity so that, for any given client type, the client type identifier is difficult to guess or predict.

In an embodiment, each client may be required to identify its client type to the coupon distribution server in some or all of the messages it sends to the coupon distribution server. The coupon distribution server may then utilize the client type identifier for several purposes. First, the coupon distribution server may use the client type identifier to determine whether or not the client is a trusted coupon client. For example, the coupon distribution server may lookup the client type identifier, or a portion thereof, in a listing of identifiers for trusted client types. In an embodiment, the client type identifier is sent to the coupon distribution server in encrypted form, so as to avoid capture by parties seeking to produce an unauthorized client that uses the client type identifier.

Second, the coupon distribution server may use the client type identifier to determine how to respond to a client's requests. The coupon distribution server may interact differently with each client depending on the client type. For example, the coupon distribution server may respond to most requests to print a coupon with a rendered coupon image. But, since some client types may be capable of rendering their own printable coupon images, the coupon distribution server may be configured to not provide clients of these types with a rendered coupon image, but to instead provide these clients with templates and background graphics for rendering a coupon image. As another example, the coupon distribution server may be configured to provide a basic coupon listings, without the coupon data necessary to print the coupons in the listing, to client types that operate in an online mode, but to provide complex coupon listings, with the coupon data necessary to print the coupons in the listing, to client types that operate in an offline mode.

### CLIENT IDENTIFICATION

In an embodiment, each individual client is assigned a unique client identifier. Like the client type identifier, the client identifier may be an alphanumerical string, of substantial size and complexity. The client identifier may be, for example, generated by the client upon installation of the client on a device, assigned by an administrator of the client during deployment of the client, or assigned by the coupon distribution server during a client registration process. The client identifier may be used for a variety of purposes, such as to enforce per-client print restrictions, provide client-specific coupon listings and data, and index information in logs and permission databases. In an embodiment, a client includes its identifier in each message it sends to the coupon distribution server. Like the client type identifier, the client identifier may be encrypted in each message for security purposes.

In an embodiment, the server may also use the client identifier to identify the client's client type. For example, the coupon distribution server may store a mapping of client identifiers to client types. This mapping may have been created as a result of an initial communication in which the client provided both a client identifier and a client type identifier. Or, this mapping may have been entered during a client registration process. In either event, the coupon distribution server may use the client identifier to lookup a client type, and then verify that the client is of an approved client type. In other embodiments, the coupon distribution server maintains a listing of clients that are approved, organized by client identifier. Thus, the very existence of the client identifier in this listing is verification that the client is approved. Again, such a listing may be built on the fly, based on initial messages to the server from approved clients, in which the clients provide both their client identifier and their client type identifier. Or, the listing may be built during registration processes.

In an embodiment, individual clients that are of an approved client type may nonetheless be unapproved, or "black-listed." Therefore, the coupon distribution server may also lookup a client identifier in a listing of unapproved clients prior to responding to a client request.

### DEVICE IDENTIFICATION

In some embodiments, per-client print restrictions may be easily circumvented by techniques such as executing multiple clients on a single device. A coupon provider may therefore wish to limit the number of times a single device may print a coupon. To facilitate per-device restrictions, as well as for purposes such as reporting coupon prints, the coupon distribution server may associate each client with an identifier that uniquely identifies the device on which the client is executing. Like the client type identifier, the device identifier may be an alphanumerical string, of substantial size and complexity.

In some embodiments, the device identifier is used instead of a client identifier, while in other embodiments the device identifier is used in conjunction with the client identifier. The device identifier may be sent by the client in some or all messages to the coupon distribution server, and may be encrypted. If the client is not required to always supply a device identifier, the client is required to always supply a client identifier. In this case, the coupon distribution may use a mapping of client identifiers to device identifiers to lookup a client's device identifier if necessary.

In an embodiment, the client may use a device "signature" as the device identifier. The device signature may be, for example, a function of various hardware and/or software identifiers. The hardware identifiers may be selected from any of a variety of fixed metadata that is accessible to the client, for any of a variety of hardware components. For example, the hardware identifiers may include serial numbers, model numbers, and physical addresses for hard drives, processors, memory units, chipsets, network interfaces, and so forth. Software identifiers may include, for example, operating system validation keys, application serial numbers, mobile device carrier identifiers, and so on. Several example techniques for generating such an identifier are described in U.S. 12/274,348.

In an embodiment, for devices such as device 140, the device identifier may have been pre-selected by the device manufacturer, in which case the client identifies the identifier simply by locating it in, for example, the device's boot ROM.

In an embodiment, the coupon distribution server maintains a separate, internal device identifier that may differ from the device identifier specified by the client (the "external device identifier"). The coupon distribution server maintains a mapping of internal device identifiers to external device identifiers. While an external device identifier based on a device signature may change over time, depending on hardware and other configuration changes at the device, the internal device identifier used by the coupon distribution server does not change. In this manner, users cannot circumvent device-based printing limits by simply making minor changes to the device's configuration. When the coupon distribution server receives a request specifying an external device identifier that the coupon distribution server has not previously seen, the coupon distribution server may first check to see if the new external device identifier is sufficiently similar to an old external device identifier mapped to a known device. If so, the coupon distribution server assumes that the client is executing on a known device, and re-maps the internal device identifier for the known device to the new external device identifier.

In an embodiment, the internal device identifier is made known to the client, and the client may then utilize the internal device identifier to identify itself, in place of a client identifier or an external device identifier.

In an embodiment, the term "unique" as used herein does not mean that an identifier must be selected in a manner that guarantees that no two devices will ever have the same identifier. Rather, a unique identifier is one that is selected using an algorithm that minimizes, to a level of sufficiency approved by the selector, the risk that two devices will ever have the same identifier.

In an embodiment, a device identifier may represent a group of devices, as opposed to a single device. For example, in the case of FIG. 1, coupon distribution server 110 may recognize a single device identifier, belonging to computer 150, as representing both computer 150 as well as all devices to which client 151 relays coupon data-in this case, devices 161-163.

### 4.2. DETERMINING WHETHER A REQUEST IS FROM AN AUTHORIZED CLIENT

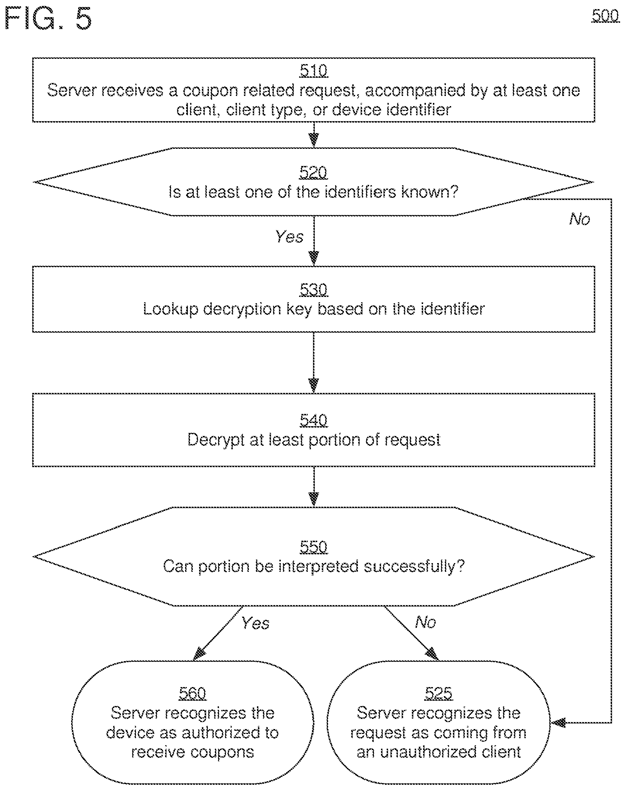

In an embodiment, prior to responding to any request, a coupon distribution server must ensure that the request is from an authorized client. FIG. 5 illustrates determining whether a client is authorized, in an embodiment. The illustrated method is but one example of how such a determination may be made. Other methods may comprise fewer or additional steps, performed in different orders. The illustrated steps may be performed responsive to any request a coupon distribution server receives-for instance, in response to step 210 or 250 of FIG. 2, or as a prerequisite to performing steps 310 and 320 of FIG. 3 or steps 410 and 420 of FIG. 4.

At step 510, a server, such as coupon distribution server 110, receives a coupon related request that is accompanied by at least one client, client type, or device identifier, such as the identifiers described in the previous sections, or a combination or variation thereof.

At step 520, the server determines whether at least one of the supplied identifiers is known. In other words, the server determines whether its databases contain certain types of information about at least one of the identifiers. In an embodiment, the type of information that the server looks for is any information that indicates or can be used to lookup a decryption key to decrypt the message from the client. If the identifier is unknown, then at step 525 the server determines that the request is from an unauthorized client.

If in step 520 the server determines that the identifier is known, then at step 530, the server looks up a decryption key associated with the identifier. This lookup may be made, for instance, based on a client identifier and/or a client type identifier included in the request of step 510. The decryption key matches an encryption key that was previously disseminated to the client that sent the request by either the server or the coupon distributor for use in encrypting communications to the server. For example, as part of a client approval process, the coupon distributor may provide a vendor of a certain client type with a unique encryption key to be used by clients of that client type. Or, the server may issue a particular client with a unique encryption key during a self-registration process initiated by the particular client.

In an embodiment, the encryption keys provided to the client are such that, if the server is able to understand the message upon decrypting it with a corresponding decryption key, the server may safely assume that the message was sent by a client that the server has already authorized. Thus, at step 540, the server decrypts at least a portion of the request using the decryption key. At step 550, the server then attempts to interpret at least the portion of the request. If the server is able to successfully interpret the portion, then at step 560, the client is determined to be authorized. On the other hand, if the server is unable to successfully interpret the portion, then the client is determined to be unauthorized and flow proceeds to step 525.

In an embodiment, the server successfully interprets the portion of the message if the portion conforms to an expected syntax for communicating with the server. For example, the server may expect to receive requests that include at least one of a predefined set of parameters or commands in a protocol or Application Programming Interface defined by the coupon provider.

Optionally, in response to a request from an unauthorized client, the server may initiate the registration process with the client, so as to allow it to become registered. Suitable registration processes may be executed automatically, for example, by a web registration system in response to input by the end user of the client, and/or may involve manual input by the coupon distributor.

In an embodiment, using steps such as described above, a client may be pre-authorized to print coupons, even though the client itself has not been registered with the server. This is possible, in part, because all clients of the same client type as the client are pre-authorized. By providing a known client type identifier, the client is able to inform the server that it is pre-authorized to print coupons even though its client identifier or device identifier is not yet known to the server. In an embodiment, the client type identifier in and of itself is evidence enough to the server that the client is of the correct client type. However, in an embodiment, the server utilizes the decryption aspects of FIG. 5 to verify that the client is actually of the identified client type.

In an embodiment, in response to the server determining that a client with an unknown client identifier is authorized, the server may add information to appropriate databases for tracking the client, including the client's identifier.

### 4.3. PROVIDING COUPON LISTINGS

A coupon distribution server such as coupon distribution server 110 may take a number of actions to build and send coupon listings. For example, the server may retrieve data describing a plurality of coupon offers from a data store, such as data store 115. Instead of retrieving data for all of the coupon offers in a data store, the server may retrieve only a filtered subset. Or, the server may apply its own filters after retrieving the data from the data store. In either event, the plurality of coupon offers may be reduced for purposes such as removing expired coupon offers, enforcing aggregate and/or per-device printing limits, sending only updated or new coupon data to a client, limiting the plurality of coupon offers to keywords, categories, or other criteria specified by the client, limiting the plurality of coupon offers to campaigns targeting specific demographics, limiting the number of coupon offers to a target number, and so on. Moreover, the retrieved coupon data may be filtered so as to only contain a subset of the available data for any particular coupon offer for example, an offer title, description, category, and face value.

In an embodiment, a coupon listing is a simple list of coupon offer identifiers, without any additional information describing the listed offers. In order for a client to display and/or print information about any listed offer, the server must separately provide more detailed coupon data either voluntarily, or at the request of the client. However, the detailed coupon offer may be stored locally at the client, so that the client does not need to request the detailed data again when it receives an updated coupon listing. Thus, the size of coupon listings may be minimized to avoid the unnecessary transfer of data already known to the client.

Once the server has retrieved the coupon data from the data store, and optionally filtered the coupon data, the server may optionally reformat the data so that it is in a form suitable to the client that requested the coupon listing. For example, the server may return the coupon listing in any of a variety of well-known or proprietary formats, including XML, CSV, SQL result set, or plain text. In an embodiment, the server returns the coupon listing in one or more web pages that include, for each listed coupon offer, information such as an offer title, coupon terms, and coupon provider.

In an embodiment, some or all coupon listings provided by the server may be built before the request, as opposed to in response to the request. For example, the server may build a single coupon listing at periodic intervals, and provide this listing to any clients that request it during that interval.

### 4.4. ENFORCING PRINT LIMITS

In an embodiment, a coupon distribution server performs one or more checks to enforce print limits prior to allowing some or all clients to print a coupon. The server may employ these checks to enforce aggregate, user-based, client-based, device-based, or any other type of distribution limit. For example, the coupon distribution may perform these checks during step 260 of FIG. 2. The coupon distribution server may also perform these checks to determine which coupons are available when sending coupon data to offline clients, such as during steps 310 and 370 of FIG. 3 or 410 and 470 of FIG. 4.

In an embodiment, coupon distribution server 110 utilizes the information in distribution logs 118 and device data 117 in order to control the distribution of coupons to devices 120, 130, 140, and computer 150. Prior to allowing a client 121, 131, 141, or 151 to print a particular coupon, coupon distribution server 110 may utilize distribution logs 118 to determine how many times coupons have been printed for the particular coupon offer, in aggregate. Coupon distribution server 110 may then compare the total number of times coupons have been printed to an aggregate distribution limit for the particular coupon offer, as provided by the particular offer's provider 190 and recorded in coupon data 116. Based on this comparison, coupon distribution server 110 determines whether to allow the client to print the particular coupon. For example, coupon distribution server 110 may only allow the client to print the particular coupon if the total number of coupons printed has not exceeded the aggregate distribution limit for the particular offer.

In an embodiment, prior to allowing a client 121, 131, 141, or 151 to print a particular coupon, coupon distribution server 110 may utilize distribution logs 118 to determine the number of coupons the client, or the device at which the client is executing, has previously printed for the particular coupon offer. Coupon distribution server 110 may then compare this number to a device or client distribution limit, as provided by the particular offer's provider 190 and recorded in coupon data 116. Based on this comparison, coupon distribution server 110 determines whether to allow the client to print the particular coupon. For example, a provider 190 may have specified that coupons for the particular offer may only be printed twice by any given device. If the client's device has already printed coupons for the particular offer twice, the coupon distribution server 110 may refuse the client's request to print the particular coupon.

In an embodiment, device and/or client based limits may be much higher, or may not even apply at all, for certain clients, such as client 151, that are intended for use in environments where the printing device is deployed in public locations. However, aggregate print limits may still apply.

In an embodiment, distribution limits may be relative to a time frame, such as a limit on the number of coupons that may be printed in a day. In such embodiments, counts maintained at the server may be reset when the time frame expires.

### 4.5. PRINTING A COUPON

In an embodiment, at least some clients cause a coupon to be printed by sending a rendered image of the coupon to a print driver at the client's device. The rendered image may be, for example, in a format such as BMP, JPEG, TIFF, PDF, EPS, PostScript, and so on. The print driver converts the rendered image, if necessary, into a print-ready format that is natively supported by the printer, such as PCL or PostScript. The print driver then sends the print-ready image of the coupon to a printing device. However, a client may also function as a print driver, in that it is capable of producing a print-ready image of the coupon and sending the print-ready image to a printing device (or causing a printing component to print the coupon), without relying upon an intermediary print driver component.

In an embodiment, the client will only send the rendered image to certain print drivers that are trusted to forward the print-ready image to actual, as opposed to virtual, printing devices.

In an embodiment, the image is rendered by the coupon provider. The image is then stored by the coupon distribution server, and relayed to clients as appropriate.

In an embodiment, the image may be rendered by the coupon distribution server based on data supplied by the coupon provider, such as templates, graphics, terms, descriptions, and so on. The server then distributes the image to the clients with coupon listings or when the client requests to print the coupon.

In an embodiment, the image may be rendered by the client. The server supplies to the client all of the information that the server would have used to render the image. Furthermore, the client comprises logic that is the same as or similar to the logic used by the server to render the image. For example, the coupon distributor may provide to client developers a library of code that implements logic for rendering the coupon. Or, the coupon distributor may provide client developers with guidelines for using the data supplied by the coupon distribution server to create a coupon.

In an embodiment, the server or the coupon provider partially renders the image of the coupon. For example, the server may generate a partially-rendered image that includes data that should be common to all copies of the coupon, such as a generic bar code, image or title. The client is then configured to finish rendering the coupon by overlaying client or device-specific information, such as a device identifier and timestamp.

While, in some embodiments, an image is only fully rendered in response to a request to print the image, in other embodiments, the image or portions thereof may be generated in advanced. For example, rather than render the image each time the server needs to send the image to a client, the server may render the image once in advance, and then send the rendered image to multiple clients without having to re-generate the image.

In an embodiment, each printed coupon is unique, so as to deter unauthorized reproduction of the coupon. For example, each rendered coupon may include one or more unique artifacts, such as textual identifiers, bar codes, or graphical elements. The unique artifacts may be based on, for example, client or device-specific identifiers, a unique coupon identifier assigned by the coupon distribution server, demographic information, or user-specific information. To ensure that each printed coupon is unique, the server or the client must wait to produce the final, fully rendered coupon image until the client has requested to print the coupon.

In an embodiment, a coupon distribution server may render a master portion of the image up front, which is distributed a maximum of once to each client. Then, at the time of printing, the coupon distribution server or the client renders "instance" portions of the coupon specific to each coupon print. The instance portion is then overlaid by the client on to the master portion, thereby yielding a fully rendered image of the coupon.

In an embodiment, each client is trusted to store rendered coupon images and other coupon data in such a manner as to ensure that a user cannot make unauthorized copies of a coupon simply by locating the coupon data in a file system. For example, the client may encrypt the coupon data, and erase coupon data that is no longer needed-for example, a rendered image of a coupon may be deleted as soon as the coupon is printed.

Further techniques for rendering and printing coupons are described in, for example, aforemention U.S. Application Serial No. 12/274,348 and U.S. Publication No. 2008/0267500 A1, as well as U.S. Publication No. 2008/0041950 A1, published February 21, 2008.

### SAMPLE UNIQUE COUPON ARTIFACT

In an embodiment, the rendered coupon image includes a PDF417 barcode based at least two distinct representations of unique print events. The barcode may include, for example, an scan-code encoded representation of the print event along with a 16 digit human readable representation. The barcode is generated in accordance with an encoding algorithm pre-selected by the coupon distributor, which algorithm may vary depending on the client. A representation of a print event may be based on a variety of inputs. For example, a representation used by an in-store kiosk might include a store ID assigned to a location at which the coupon is printed, a device-identifier, a number representing the print count (which may be in aggregate or device, client, or location specific), and portions of the coupon offer identifier.

In an embodiment, the rendered coupon image includes a GS1 barcode based at least on a GS1 code template, global to the coupon offer, into which a 15 digit string is inserted. The 15 digit string is the same as the 16 digit string used for the PDF417 barcode, but without the leading digit.

### 4.6. REPORTING COUPON PRINTS

In an embodiment, a coupon distribution server requires certain offline clients, such as intermediary client 151, to report coupon prints (or the lack thereof) at a minimum frequency designated by the server. If the client fails to report in that time, the server may take measures such as alerting the coupon distributor and cutting off coupon access to intermediary client 151.

The frequency at which a coupon distribution server requires a client to report may scale anywhere from milliseconds to days or even months, and may vary depending on the time of day, customer demand, or other circumstances. In some embodiments, the frequency is pre-determined by the coupon distributor or another entity, and then hard-coded into the client. In other embodiments, the coupon distribution server may send commands to the client, instructing the client how often it should report. Thus, the server may change the reporting frequency as necessary. In an embodiment, the coupon distributor requires a client to report every fifteen minutes.

In an embodiment, the client may report coupon prints at shorter intervals if certain defined events occur. For example, the client may be configured to report coupon prints once the number of prints for one or more coupons reaches a prescribed number. Or, the client may be configured to report coupons before or after a system shutdown.

### SAMPLE REPORT FORMAT

In an embodiment, coupon prints from intermediary client 151 may be reported via an HTTP request to the coupon distribution server. The HTTP request comprises a query string, constructed as follows. First, a unique transaction ID is chosen to create the string "t=<transID>". Next, for each device and coupon offer combination, a device-specific running count of the first print and the last print in the period since the last report are used to form together the string ",h=<deviceID>,c=<couponID>,f=<first>,l=<last>." For example, if device "15551" and coupon offer 14495125 had five prints in this period, added onto 58 reported previously, the string ",h=15551,c=14495125,f=59,1=63" may be added to the query string. Finally, this string may be encrypted using, for example, a CipherKey algorithm.

### 4.7. EXAMPLE COUPON DATA

A sample formatting for coupon data follows. This format may be used both for coupon data pertaining to a single coupon, in which case certain sections may or may not be omitted, as well as for coupon listings or batches of data describing coupons. The coupon data may be encapsulated within an archive file (e.g. in the zip format), with folders containing images to be used, and an xml file describing the coupon assets. The layout of the XML file is as follows:

### VALIDATION SECTION

This section lists attributes about the file, including ValidFrom, a date string representing the beginning of the effective period for this content, and ValidTo: a date string representing the end of the effective period for this content.

### GLOBAL SECTION

This section lists elements that are required on all coupons. Each key-value set pairs a required asset with the file name for the image object required. For example, "verify" and "background" keys may be defined.

### COUPON SECTION

This section lists each coupon included in the archive. Possible fields for each coupon are as follows.

ID-an 8-digit numeric code identifying the offer to the coupon distributor. This ID is used when recording prints.

Value-the amount of the coupon, in cents.

Summary-the image or text to display as the main text for the offer. The subfields are: Image, the filename of the image to use; Text, the first line of text, to be displayed in a larger font (e.g. Arial 18 bold); Text2: second line of text, to be displayed in a mid-sized font (e.g. Arial 10 bold)

Logo-the file name of the product image in the upper left corner of the coupon.

Legal1 the text to draw in the upper fine print section of the coupon (e.g. in a small font such as Arial 4.8).

Legal2 the text to draw in the lower fine print section of the coupon (e.g. in a small font such as 4.8).

Expiry-the form of the string to use in the expiration section of the coupon.

UPC the code for the UPC barcode in the lower left. A check digit may or may not be supplied.

EAN the code for the EAN barcode to the right of the UPC barcode.

GS1 the code for the GS1 barcode, which is placed to the right of the UPC barcode. In an embodiment, no coupon will feature both an EAN and a GS1 code.

Brand-the text to display in the lower right section of the coupon (e.g. in a mid-sized format such as Arial 10).

ManSlug the text to display in white on the black background at the top of the coupon. In an embodiment, this text has a default value of "MANUFACTURER'S COUPON", displayed in Arial 10 bold.

RetSlug: the text to display between the two fine print sections (e.g. in a smaller format such as Arial 6 bold).

Category-this is the coupon distributor's classification of the offer. It does not appear on the coupon itself, but may be useful in determining how to distribute or display the offer.

ProductUPCList this describes a list of product UPC codes known to be redeemable for the manufacturer's UPC code provided in the UPC field. If the number of product UPCs number less than 100, they will be listed separately with subfield tag ProductUPC. If there are more than 100, it is assumed that all product UPCs beginning with the manufacturer ID are eligible. The manufacturer ID will be included in the subfield tag ProductUPCFamily.

Restrictions a list of restrictions on distribution of this coupon during the intended flight. These restrictions may include: Active, indicating that the coupon goes live after the start of the effective period and contains a date string showing when the coupon will go live; Expiry, indicating the coupon shuts off before the end of the effective period, as indicated by another date string; Store, indicating that the offer is not available at all store locations, wherein each child node of this tag lists the hardware IDs of the stores where the offer is available.

### 4.8. EXAMPLE COUPON SERVER/CLIENT PROTOCOL

In an embodiment, a coupon distribution server provides the functionality set forth herein for offline clients by supporting a total of two different function calls. The first call, "PrintReport," requires the client to include a report of the number of prints, by coupon offer, that the client has been responsible for since the last time the client issued a "PrintReport" call. This number may be zero. In response, the client receives a simple listing of available coupons by coupon identifier. The second call, "GetCouponAssets," allows the client to retrieve coupon data for specific coupon offers, if the client includes the coupon identifiers of those offers. Otherwise, the server provides the client with coupon data for at least all coupons currently available to the client.

In an embodiment, a coupon distribution server also supports some or all of the following calls: GetMasterData, which allows a client to retrieve a rendered "master" portion of a coupon image for a specified coupon identifier; GetInstanceData, which allows a client to retrieve a rendered "instance" portion to layer on top of the master portion; and GetPrintData, which allows a client to retrieve a fully rendered image for a specified coupon.

These and other calls may be sent to the server over any of a variety of protocols, including HTTP, RPC, and so on.

### 5.0. IMPLEMENTATION MECHANISM-HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

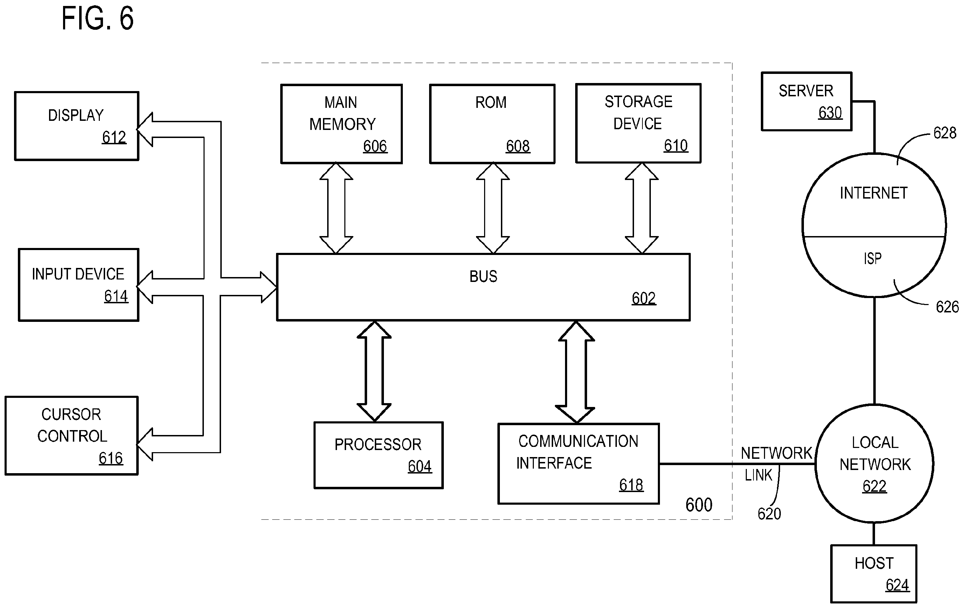

For example, FIG. 6 is a block diagram that illustrates a computer system 600 upon which an embodiment of the invention may be implemented. Computer system 600 includes a bus 602 or other communication mechanism for communicating information, and a hardware processor 604 coupled with bus 602 for processing information. Hardware processor 604 may be, for example, a general purpose microprocessor.

Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Such instructions, when stored in non-transitory storage media accessible to processor 604, render computer system 600 into a special-purpose machine that is customized to perform the operations specified in the instructions.

Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube (CRT), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

Computer system 600 may implement the techniques described herein using customized hard-wired logic, one or more ASICs or FPGAs, firmware and/or program logic which in combination with the computer system causes or programs computer system 600 to be a special-purpose machine. According to one embodiment, the techniques herein are performed by computer system 600 in response to processor 604 executing one or more sequences of one or more instructions contained in main memory 606. Such instructions may be read into main memory 606 from another storage medium, such as storage device 610. Execution of the sequences of instructions contained in main memory 606 causes processor 604 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 610. Volatile media includes dynamic memory, such as main memory 606. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 602. Transmission media can also take the form of acoustic or light waves, such as those generated during radio-wave and infra-red data communications.

Various forms of media may be involved in carrying one or more sequences of one or more instructions to processor 604 for execution. For example, the instructions may initially be carried on a magnetic disk or solid state drive of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card, cable modem, satellite modem, or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the world wide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are example forms of transmission media.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618.

The received code may be executed by processor 604 as it is received, and/or stored in storage device 610, or other non-volatile storage for later execution.

### 6.0. EXTENSIONS AND ALTERNATIVES

In the foregoing specification, embodiments have been described with reference to numerous specific details that may vary from implementation to implementation. Thus, the sole and exclusive indicator of what is the invention, and is intended by the applicants to be the invention, is the set of claims as attached. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A system (100) comprising:
a coupon distribution server (110);
a trusted intermediary client computer (150);
one or more devices (120, 130, 161, 162, 163);
wherein the coupon distribution server (110) comprises
means for receiving from one or more coupon providers (190), information defining at least a first set of one or more coupon offers;
means for identifying the first set of one or more coupon offers that is available to a trusted intermediary client computer (150),
means for sending, to the trusted intermediary client computer (150), a first coupon listing identifying the one or more coupon offers; and for sending, to the trusted intermediary client computer (150), first coupon data (195) comprising data necessary for the trusted intermediary client (150) or the one or more devices (120, 130, 161, 162, 163) to generate coupons for each of the one or more coupon offers;
means for, subsequent to sending the first coupon listing, receiving a report (191) from the trusted intermediary client computer (150), wherein the report indicates a number of times that coupons for at least a first coupon offer of the one or more coupon offers have been generated for the one or more devices (120, 130, 161, 162, 163) by the trusted intermediary client (150) or the one or more devices (120, 130, 161, 162, 163) since the trusted intermediary client computer (150) last reported to the coupon distribution server (110);
means for sending, to the trusted intermediary client computer (150), a second coupon listing that indicates which coupon offers in the first set of one or more coupon offers are no longer available to the trusted intermediary client computer (150); and
wherein the trusted intermediary client computer (150) comprises an intermediary client (151), the trusted intermediary client computer (150) being identified by a device identifier and/or the intermediary client (151) being identified by a client identifier,
wherein the intermediary client (151) comprises
means for receiving, from the coupon distribution server (110), the coupon listing that identifies a first plurality of coupon offers that are available to a trusted intermediary client computer (150), and for receiving the first coupon data;
means for relaying at least a portion of the first coupon listing and at least a portion of the first coupon data to one or more devices (120, 130, 161, 162, 163), wherein the relaying comprises reformatting the coupon listing and/or the first coupon data to be compatible with a proprietary coupon browsing and printing application executing on the respective one of the one or more devices (120, 130, 161, 162, 163);
means for sending the report (190) indicating the number of times that coupons have been generated for the one or more devices (120, 130, 161, 162, 163) by the trusted intermediary client (150) or the one or more devices (120, 130, 161, 162, 163) to the coupon distribution server (110);
means for receiving, from the coupon distribution server (110), the second coupon listing;
means for relaying at least a portion of the second coupon listing to the one or more devices (120, 130, 161, 162, 163),
wherein coupon generation at the one or more devices (120, 130, 161, 162, 163) is supervised by the trusted intermediary client (151) on behalf of the coupon distribution server (110), and distribution of coupons to the one or more devices comprises coupon generation at the trusted intermediary client computer (150) or at the one or more devices (120, 130, 161, 162, 163); and
generating coupons comprises generating a unique coupon artefact based on information that is unique to the trusted intermediary client computer (150) or to the one or more devices (120, 130, 161, 162, 163);
wherein the coupon distribution server (110) comprises means to receive the client identifier and/or device identifier from the trusted intermediary client computer (150) and determines that the intermediary client (151) is an authorized client by determining that the client identifier and/or the device identifier is known and contains information that indicates a decryption key and by looking up the decryption key associated with the client identifier and/or the device identifier, the decryption key matching an encryption key previously provided to the trusted intermediary client computer (150).

2. The system (100) of claim 1, wherein the trusted intermediary client computer (150) further comprises:
means for receiving, from each device (120, 130, 161, 162, 163) of the one or more devices (120, 130, 161, 162, 163), one or more device reports indicating a number of times the device has generated one or more coupons for one or more of the first plurality of coupon offers,
means for aggregating the one or more device reports to produce a trusted intermediary client computer report (190) that indicates at least, for one or more offers of the first plurality of coupon offers, a number of times that the one or more devices (120, 130, 161, 162, 163) have generated coupons for the offer since the trusted intermediary client computer (150) last reported to the coupon distribution server;
means for sending the trusted intermediary client computer report (190) to the coupon distribution server (110).

3. The system (100) of Claims 1 or 2, wherein
the coupon distribution server (110) does not receive requests to generate the coupons from the trusted intermediary client computer (150) or the one or more devices (120, 130, 161, 162, 163); and/or the first coupon data (195) does not comprise a complete image of the coupon that is generated by the trusted intermediary client computer (150) or the one or more devices (120, 130, 161, 162, 163) for at least one coupon offer.

4. The system (100) of Claims 1-3, wherein
the report further indicates how many times coupons for at least a second coupon offer of the one or more coupon offers have been generated by the one or more devices (120, 130, 161, 162, 163) since the trusted intermediary client computer (150) last reported to the coupon distribution server (110), wherein the first coupon offer is different than the second coupon offer.

5. The system (100) of Claims 1-4, wherein
the second coupon listing indicates that the first coupon offer is no longer available; and/or the second coupon listing indicates that a second coupon offer is now available, wherein the first coupon listing did not indicate that the second coupon offer was available.

6. The system (100) of Claims 1-5, wherein the coupon distribution server further (110) comprises:
means for storing a count of the number of times coupons have been generated for the first coupon offer; and
means for updating its count to include the number of times coupons for the first coupon offer have been generated by the one or more devices (120, 130, 161, 162, 163) based on the report (190) from the trusted intermediary client computer (150);
means for storing a distribution limit for the first coupon offer;
means for determining that the first coupon offer is no longer available based on a comparison of the updated count to the distribution limit;
wherein the second coupon listing reflects that the first coupon offer is no longer available.

7. The system (100) of Claims 1-6, wherein
the one or more devices (120, 130, 161, 162, 163) are not connected to the coupon distribution server (110) when the one or more devices (120, 130, 161, 162, 163) generate a coupon for the first coupon offer.

8. The system (100) of Claims 1-7, wherein the one or more devices (120, 130, 161, 162, 163) comprise:
a mobile device (130); and/or
a plurality of kiosk devices (161, 162, 163) deployed in a retail location, wherein the trusted intermediary client computer (150) executes at a device other than the one or more devices (120, 130, 161, 162, 163), wherein the trusted intermediary client computer (150) supervises coupon generation at the one or more devices (120, 130, 161, 162, 163) by relaying data derived from the first coupon listing and the first coupon data to the one or more devices (120, 130, 161, 162, 163).

9. The system (100) of Claims 1-8, wherein each of the coupons generated for the first coupon offer is unique.

10. The system (100) of Claims 1-9, wherein:
the trusted intermediary client computer (150) receives the second coupon listing as a response to the trusted intermediary client computer report (195); and/or
the trusted intermediary client computer (150) sends the trusted intermediary client computer report (195) as part of a periodic reporting protocol.

11. Method comprising the steps of:
receiving, at a coupon distribution server (110), information defining at least a first set of one or more coupon offers from one or more coupon providers (190),
identifying, at the coupon distribution server (110), the first set of one or more coupon offers that is available to a trusted intermediary client computer (150),
sending, by the coupon distribution server (110) to a trusted intermediary client computer (150), a first coupon listing identifying the one or more coupon offers and first coupon data (195) comprising data necessary for the trusted intermediary client (150) or for one or more devices (120, 130, 161, 162, 163) to generate coupons for each of the one or more coupon offers;
subsequent to sending the first coupon listing, receiving, at the coupon distribution server (110), a report (191) from the trusted intermediary client computer (150), wherein the report indicates a number of times that coupons for at least a first coupon offer of the one or more coupon offers have been generated for the one or more devices (120, 130, 161, 162, 163) by the trusted intermediary client (150) or the one or more devices (120, 130, 161, 162, 163) since the trusted intermediary client computer (150) last reported to the coupon distribution server (110);
sending, from the coupon distribution server (110) to the trusted intermediary client computer (150), a second coupon listing that indicates which coupon offers in the first set of one or more coupon offers are no longer available to the trusted intermediary client computer (150); wherein the trusted intermediary client computer (150) comprises an intermediary client (151), the trusted intermediary client computer (150) being identified by a device identifier and/or the intermediary client (151) being identified by a client identifier, wherein the method further comprises
receiving, at the intermediary client (151) from the coupon distribution server (110), the coupon listing that identifies a first plurality of coupon offers that are available to the trusted intermediary client computer (150), and for receiving the first coupon data;
relaying, at the intermediary client (151), at least a portion of the first coupon listing and at least a portion of the first coupon data to one or more devices (120, 130, 161, 162, 163), wherein the relaying comprises reformatting the coupon listing and/or the first coupon data to be compatible with a proprietary coupon browsing and printing application executing on the respective one of the one or more devices (120, 130, 161, 162, 163);
sending, at the intermediary client (151), the report (190) indicating the number of times that coupons have been generated for the one or more devices (120, 130, 161, 162, 163) by the trusted intermediary client (150) or the one or more devices (120, 130, 161, 162, 163) to the coupon distribution server (110);
receiving, at the intermediary client (151) from the coupon distribution server (110), the second coupon listing;
relaying, at the intermediary client (151), at least a portion of the second coupon listing to the one or more devices (120, 130, 161, 162, 163),
wherein coupon generation at the one or more devices (120, 130, 161, 162, 163) is supervised by the trusted intermediary client (150) on behalf of the coupon distribution server (110), and distribution of coupons to the one or more devices comprises coupon generation at the trusted intermediary client computer (150) or at the one or more devices (120, 130, 161, 162, 163); and generating coupons comprises generating a unique coupon artefact based on information that is unique to the trusted intermediary client computer (150) or to the one or more devices (120, 130, 161, 162, 163),
receiving, at the coupon distribution server, the client identifier and/or device identifier from the trusted intermediary client computer (150) and determining that the intermediary client (151) is an authorized client by determining that the client identifier and/or the device identifier contains information that indicates a decryption key and by looking up the decryption key associated with the client identifier and/or the device identifier, the decryption key matching an encryption key previously provided to the trusted intermediary client computer (150).

12. One or more computer-readable storage media storing instruction that, when executed by one or more computing devices, cause performance of the method of claim 11.

## Patentansprüche

1. System (100), Folgendes umfassend:
einen Couponverteilungsserver (110);
einen vertrauenswürdigen zwischengeschalteten Client-Computer (150);
eine oder mehrere Vorrichtungen (120, 130, 161, 162, 163);
wobei der Couponverteilungsserver (110) Folgendes umfasst:
Mittel zum Empfangen von Informationen, die mindestens einen ersten Satz eines oder mehrerer Couponangebote, von einem oder mehreren Couponanbietern (190), definieren;
Mittel zum Identifizieren des ersten Satzes eines oder mehrerer Couponangebote, die einem vertrauenswürdigen zwischengeschalteten Client-Computer (150) zur Verfügung stehen,
Mittel zum Senden einer ersten Couponauflistung, die das eine oder die mehreren Couponangebote identifiziert, an den vertrauenswürdigen zwischengeschalteten Client-Computer (150); und zum Senden von ersten Coupondaten (195) an den vertrauenswürdigen zwischengeschalteten Client-Computer (150), wobei die Coupondaten (195) Daten umfassen, die für den vertrauenswürdigen zwischengeschalteten Client-Computer (150) oder die eine oder mehreren Vorrichtungen (120, 130, 161, 162, 163) erforderlich sind zum Erzeugen von Coupons für jedes der einen oder mehreren Couponangebote;
Mittel zum Empfangen eines Berichts (191) von dem vertrauenswürdigen zwischengeschalteten Client-Computer (150) nach dem Senden der ersten Couponauflistung, wobei der Bericht eine Anzahl von Malen angibt, bei denen Coupons erzeugt wurden für mindestens ein erstes Couponangebot der einen oder mehreren Couponangebote für die eine oder mehreren Vorrichtungen (120, 130, 161, 162, 163) durch den vertrauenswürdigen zwischengeschalteten Client-Computer (150) oder die eine oder mehreren Vorrichtungen (120, 130, 161, 162, 163), seit dem letzten Melden des vertrauenswürdigen zwischengeschalteten Client-Computers (150) an den Couponverteilungsserver (110);
Mittel zum Senden einer zweiten Couponauflistung an den vertrauenswürdigen zwischengeschalteten Client-Computer (150), die angibt, welche Couponangebote in dem ersten Satz eines oder mehrerer Couponangebote dem vertrauenswürdigen zwischengeschalteten Client-Computer (150) nicht mehr zur Verfügung stehen; und
wobei der vertrauenswürdige zwischengeschaltete Client-Computer (150) einen zwischengeschalteten Client (151) umfasst, wobei der vertrauenswürdige zwischengeschaltete Client-Computer (150) durch eine Gerätekennung identifiziert wird und / oder der zwischengeschaltete Client (151) durch eine Client-Kennung identifiziert wird,
wobei der zwischengeschaltete Client (151) Folgendes umfasst
Mittel zum Empfangen der Couponauflistung, die eine erste Vielzahl von Couponangeboten identifiziert, welche einem vertrauenswürdigen zwischengeschalteten Client-Computer (150) zur Verfügung stehen, von dem Couponverteilungsserver (110), und zum Empfangen der ersten Coupondaten;
Mittel zum Übermitteln von mindestens einem Teil der ersten Couponauflistung und mindestens einem Teil der ersten Coupondaten an eine oder mehrere Vorrichtungen (120, 130, 161, 162, 163), wobei das Übermitteln das Umformatieren der Couponauflistung und / oder der ersten Coupondaten umfasst, um mit einer proprietären Coupon-Browsing- und Druckanwendung kompatibel zu sein, die auf der jeweiligen einen der einen oder mehreren Vorrichtungen (120, 130, 161, 162, 163) ausgeführt wird;
Mittel zum Senden des Berichts (190), der die Anzahl von Malen angibt, bei denen Coupons für eine oder mehrere Vorrichtungen (120, 130, 161, 162, 163) durch den vertrauenswürdigen zwischengeschalteten Client-Computer (150) oder die eine oder mehreren Vorrichtungen (120, 130, 161, 162, 163) erzeugt wurden, an den Couponverteilungsserver (110);
Mittel zum Empfangen der zweiten Couponauflistung von dem Couponverteilungsserver (110);
Mittel zum Übermitteln von mindestens einem Teil der zweiten Couponauflistung an eine oder mehrere Vorrichtungen (120, 130, 161, 162, 163),
wobei das Erzeugen von Coupons an einer oder mehreren Vorrichtungen (120, 130, 161, 162, 163) vom vertrauenswürdigen zwischengeschalteten Client (151) im Namen des Couponverteilungsservers (110) überwacht wird, und das Verteilen von Coupons an die eine oder mehreren Vorrichtungen, das Erzeugen von Coupons auf dem vertrauenswürdigen zwischengeschalteten Client-Computer (150) oder an einer oder mehreren Vorrichtungen (120, 130, 161, 162, 163) umfasst; und
Erzeugen von Coupons, umfassend das Erzeugen eines einzigartigen Coupon-Artefakts basierend auf Informationen, die für den vertrauenswürdigen zwischengeschalteten Client-Computer (150) oder für eine oder mehrere Vorrichtungen (120, 130, 161, 162, 163) einzigartig sind;
wobei der Couponverteilungsserver (110) Mittel zum Empfangen der Client-Kennung und / oder Gerätekennung von dem vertrauenswürdigen zwischengeschalteten Client-Computer (150) umfasst und bestimmt, dass der zwischengeschaltete Client (151) ein autorisierter Client ist, durch Bestimmen, dass die Client-Kennung und / oder die Gerätekennung bekannt ist und Informationen enthält, die einen Entschlüsselungsschlüssel anzeigen, und indem er den der Client-Kennung und / oder Gerätekennung zugeordneten Entschlüsselungsschlüssel nachschlägt, wobei der Entschlüsselungsschlüssel mit einem zuvor dem vertrauenswürdigen zwischengeschalteten Client-Computer (150) bereitgestellten Verschlüsselungsschlüssel übereinstimmt.

2. System (100) nach Anspruch 1, wobei der vertrauenswürdige zwischengeschaltete Client-Computer (150) ferner Folgendes umfasst:
Mittel zum Empfangen eines oder mehrerer Vorrichtungsberichte von jeder Vorrichtung (120, 130, 161, 162, 163) der einen oder mehreren Vorrichtungen (120, 130, 161, 162, 163), die eine Häufigkeit anzeigen, mit der die Vorrichtung einen oder mehrere Coupons für einen oder mehrere der ersten Vielzahl von Couponangeboten erzeugt hat,
Mittel zum Zusammenfassen der einen oder mehreren Vorrichtungsberichte, um einen vertrauenswürdigen zwischengeschalteten Client-Computerbericht (190) zu erzeugen, der zumindest für ein oder mehrere Angebote aus der ersten Vielzahl von Couponangeboten mehrmals anzeigt, dass die eine oder mehreren Vorrichtungen (120, 130, 161, 162, 163), seit dem letzten Bericht des vertrauenswürdigen zwischengeschalteten Client-Computers (150) an den Couponverteilungsserver, Coupons für das Angebot erzeugt haben;
Mittel zum Senden des vertrauenswürdigen zwischengeschalteten Client-Computerberichts (190) an den Couponverteilungsserver (110).

3. System (100) nach Anspruch 1 oder 2, wobei
der Couponverteilungsserver (110) keine Anfragen zum Erzeugen der Coupons von dem vertrauenswürdigen zwischengeschalteten Client-Computer (150) oder von der einen oder den mehreren Vorrichtungen (120, 130, 161, 162, 163) empfängt; und / oder die ersten Coupondaten (195) kein vollständiges Bild des Coupons umfassen, der von dem vertrauenswürdigen zwischengeschalteten Client-Computer (150) oder der einen oder den mehreren Vorrichtungen (120, 130, 161, 162, 163) für mindestens ein Couponangebot erzeugt wird.

4. System (100) nach Anspruch 1 bis 3, wobei
der Bericht ferner angibt, wie oft Coupons für mindestens ein zweites Couponangebot des einen oder der mehreren Couponangebote von der einen oder den mehreren Vorrichtungen (120, 130, 161, 162, 163) erzeugt wurden, seit der letzte Meldung des vertrauenswürdigen zwischengeschalteten Client-Computers (150) an den Couponverteilungsserver (110), wobei sich das erste Couponangebot vom zweiten Couponangebot unterscheidet.

5. System (100) nach Anspruch 1 bis 4, wobei
die zweite Couponauflistung anzeigt, dass das erste Couponangebot nicht mehr verfügbar ist; und / oder die zweite Couponauflistung anzeigt, dass ein zweites Couponangebot jetzt verfügbar ist, wobei die erste Couponauflistung nicht anzeigt, dass das zweite Couponangebot verfügbar war.

6. System (100) nach Anspruch 1 bis 5, wobei der Couponverteilungsserver (110) ferner Folgendes umfasst:
Mittel zum Speichern einer Zählung der Anzahl von Malen, bei denen Coupons für das erste Couponangebot erzeugt wurden; und
Mittel zum Aktualisieren seiner Zählung, um die Anzahl der von einer oder mehreren Vorrichtungen (120, 130, 161, 162, 163) für das erste Couponangebot erzeugten Coupons, basierend auf dem Bericht (190) des vertrauenswürdigen zwischengeschalteten Client-Computers (150), zu berücksichtigen;
Mittel zum Speichern eines Verteilungsgrenzwertes für das erste Couponangebot;
Mittel zum Bestimmen, dass das erste Couponangebot nicht mehr verfügbar ist, basierend auf einem Vergleich der aktualisierten Anzahl mit dem Verteilungsgrenzwert;
wobei die zweite Couponauflistung widerspiegelt, dass das erste Couponangebot nicht mehr verfügbar ist.

7. System (100) nach Anspruch 1 bis 6, wobei
die eine oder mehreren Vorrichtungen (120, 130, 161, 162, 163) nicht mit dem Couponverteilungsserver (110) verbunden sind, wenn die eine oder mehreren Vorrichtungen (120, 130, 161, 162, 163) einen Coupon für das erste Couponangebot erzeugen.

8. System (100) nach Anspruch 1 bis 7, wobei die eine oder mehreren Vorrichtungen (120, 130, 161, 162, 163) Folgendes umfassen:
eine mobile Vorrichtung (130); und / oder
eine Vielzahl von Kioskvorrichtungen (161, 162, 163), die an einem Verkaufsort bereitgestellt werden, wobei der vertrauenswürdige zwischengeschaltete Client-Computer (150) an einer anderen Vorrichtung als der einen oder den mehreren Vorrichtungen (120, 130, 161, 162, 163) ausgeführt wird, wobei der vertrauenswürdige zwischengeschaltete Client-Computer (150) die Coupongenerierung an der einen oder den mehreren Vorrichtungen (120, 130, 161, 162, 163) überwacht, indem er Daten, die von der ersten Couponauflistung und den ersten Coupondaten abgeleitet sind, an die eine oder mehreren Vorrichtungen (120, 130, 161, 162, 163) übermittelt.

9. System (100) nach Anspruch 1 bis 8, wobei jeder der für das erste Couponangebot erzeugten Coupons einzigartig ist.

10. System (100) nach Anspruch 1 bis 9, wobei:
der vertrauenswürdige zwischengeschaltete Client-Computer (150) die zweite Couponauflistung als eine Reaktion auf den Bericht (195) des vertrauenswürdigen zwischengeschalteten Client-Computers erhält; und / oder
der vertrauenswürdige zwischengeschaltete Client-Computer (150) den Bericht (195) des vertrauenswürdigen zwischengeschalteten Client-Computers als Teil eines periodischen Berichtsprotokolls sendet.

11. Verfahren, die folgenden Schritte umfassend:
Empfangen von Informationen, die mindestens einen ersten Satz von einem oder mehreren Couponangeboten von einem oder mehreren Couponanbietern (190) definieren, auf einem Couponverteilungsserver (110),
Identifizieren des ersten Satzes von einem oder mehreren Couponangeboten, die einem vertrauenswürdigen zwischengeschalteten Client-Computer (150) zur Verfügung stehen, auf dem Couponverteilungsserver (110);
Senden einer ersten Couponauflistung durch den Couponverteilungsserver (110) an einen vertrauenswürdigen zwischengeschalteten Client-Computer (150), wobei die erste Couponauflistung das eine oder die mehreren Couponangebote und erste Coupondaten (195) identifiziert, welche Daten umfassen, die für den vertrauenswürdigen zwischengeschalteten Client-Computer (150) oder für eine oder mehrere Vorrichtungen (120, 130, 161, 162, 163) zum Erzeugen von Coupons für jedes der einen oder mehreren Couponangeboten erforderlich sind;
nach dem Senden der ersten Couponauflistung, Empfangen eines Berichts (191) von dem vertrauenswürdigen zwischengeschalteten Client-Computer (150) auf dem Couponverteilungsserver (110), wobei der Bericht eine Anzahl von Malen angibt, bei denen Coupons für mindestens ein erstes Coupon-Angebot der einen oder mehreren CouponAngebote für die eine oder mehreren Vorrichtungen (120, 130, 161, 162, 163) durch den vertrauenswürdigen zwischengeschalteten Client-Computer (150) oder die eine oder mehrere Vorrichtungen (120, 130, 161, 162, 163) generiert wurden, seitdem der vertrauenswürdige zwischengeschaltete Client-Computer (150) das letzte Mal den Couponverteilungsserver (110) benachrichtigt hat;
Senden einer zweiten Couponauflistung vom Couponverteilungsserver (110) an den vertrauenswürdigen zwischengeschalteten Client-Computer (150), die angibt, welche Couponangebote im ersten Satz eines oder mehrerer Couponangebote für den vertrauenswürdigen zwischengeschalteten Client-Computer (150) nicht mehr verfügbar sind; wobei der vertrauenswürdige zwischengeschaltete Client-Computer (150) einen zwischengeschalteten Client (151) umfasst, wobei der vertrauenswürdige zwischengeschaltete Client-Computer (150) durch eine Gerätekennung identifiziert wird und / oder der zwischengeschaltete Client (151) durch eine Client-Kennung identifiziert wird, wobei das Verfahren ferner umfasst:
das Empfangen der Couponauflistung vom Couponverteilungsserver (110) auf dem zwischengeschalteten Client (151), wobei die Couponauflistung eine erste Vielzahl von Couponangeboten identifiziert, die dem vertrauenswürdigen zwischengeschalteten Client-Computer (150) zur Verfügung stehen, und das Empfangen der ersten Coupondaten;
Übermitteln von mindestens einem Teil der ersten Couponauflistung und mindestens einem Teil der ersten Coupondaten an eine oder mehrere Vorrichtungen (120, 130, 161, 162, 163) auf dem zwischengeschalteten Client (151), wobei das Übermitteln ein Umformatieren der Couponauflistung und / oder der ersten Coupondaten umfasst, um mit einer proprietären Coupon-Browsing- und Druckanwendung kompatibel zu sein, die auf der jeweiligen der einen oder mehreren Vorrichtungen (120, 130, 161, 162, 163) ausgeführt wird;
auf dem zwischengeschalteten Client (151), Senden des Berichts (190), der die Anzahl von Malen angibt, bei denen Coupons für die eine oder mehreren Vorrichtungen (120, 130, 161, 162, 163) von dem vertrauenswürdigen zwischengeschalteten Client-Computer (150) oder von den einen oder mehreren Vorrichtungen (120, 130, 161, 162, 163) erzeugt wurden, an den Couponverteilungsserver (110);
Empfangen der zweiten Couponauflistung von dem Couponverteilungsserver (110) auf dem zwischengeschalteten Client (151);
Übermitteln, auf dem zwischengeschalteten Client (151), von mindestens einem Teil der zweiten Couponauflistung an eine oder mehrere Vorrichtungen (120, 130, 161, 162, 163),
wobei die Couponerzeugung an der einen oder den mehreren Vorrichtungen (120, 130, 161, 162, 163) von dem vertrauenswürdigen zwischengeschalteten Client-Computer (150) im Auftrag von dem Couponverteilungsserver (110) überwacht wird, und das Verteilen von Coupons an die eine oder mehreren Vorrichtungen die Couponerzeugung auf dem vertrauenswürdigen zwischengeschalteten Client-Computer (150) oder an eine oder mehrere Vorrichtungen (120, 130, 161, 162, 163) umfasst; und das Erzeugen von Coupons das Erzeugen eines einzigartigen Coupon-Artefakts umfasst, basierend auf Informationen, die einzigartig für den vertrauenswürdigen zwischengeschalteten Client-Computer (150) oder für eine oder mehrere Vorrichtungen (120, 130, 161, 162, 163) gelten,
Empfangen der Client-Kennung und / oder Gerätekennung vom vertrauenswürdigen zwischengeschalteten Client-Computer (150) auf dem Coupon-Verteilungsserver und das Bestimmen, dass der zwischengeschaltete Client (151) ein autorisierter Client ist, indem bestimmt wird, dass die Client-Kennung und / oder die Gerätekennung Informationen enthält, die einen Entschlüsselungsschlüssel angeben, und indem der Entschlüsselungsschlüssel gesucht wird, welcher der Client-Kennung und / oder der Gerätekennung zugeordnet ist, wobei der Entschlüsselungsschlüssel mit einem zuvor dem vertrauenswürdigen zwischengeschalteten Client-Computer (150) bereitgestellten Verschlüsselungsschlüssel übereinstimmt.

12. Ein oder mehrere computerlesbare Speichermedien, die eine Anweisung speichern, die, wenn sie von einer oder mehreren Computervorrichtungen ausgeführt wird, das Durchführen des Verfahrens nach Anspruch 11 bewirkt.

## Revendications

1. Système (100) comprenant :
un serveur de distribution de coupons (110) ;
un ordinateur de client intermédiaire de confiance (150) ;
un ou plusieurs dispositifs (120, 130, 161, 162, 163) ;
dans lequel le serveur de distribution de coupons (110) comprend
un moyen de réception à partir d'un ou plusieurs fournisseurs de coupons (190), d'informations définissant au moins un premier ensemble d'une ou plusieurs offres de coupon ;
un moyen d'identification du premier ensemble d'une ou plusieurs offres de coupon qui est disponible pour un ordinateur de client intermédiaire de confiance (150),
un moyen d'envoi, à l'ordinateur de client intermédiaire de confiance (150), d'une première liste de coupons identifiant les une ou plusieurs offres de coupon ; et d'envoi, à l'ordinateur de client intermédiaire de confiance (150), de premières données de coupons (195) comprenant des données nécessaires pour que le client intermédiaire de confiance (150) ou les un ou plusieurs dispositifs (120, 130, 161, 162, 163) génèrent des coupons pour chacune des une ou plusieurs offres de coupon ;
un moyen de réception, après l'envoi de la première liste de coupons, d'un rapport (191) à partir de l'ordinateur de client intermédiaire de confiance (150), dans lequel le rapport indique un nombre de fois où des coupons pour au moins une première offre de coupon des une ou plusieurs offres de coupon ont été générés pour les un ou plusieurs dispositifs (120, 130, 161, 162, 163) par le client intermédiaire de confiance (150) ou les un ou plusieurs dispositifs (120, 130, 161, 162, 163) depuis que l'ordinateur de client intermédiaire de confiance (150) a envoyé son dernier rapport au serveur de distribution de coupons (110) ;
un moyen d'envoi, à l'ordinateur de client intermédiaire de confiance (150), d'une seconde liste de coupons qui indique quelles offres e coupon dans le premier ensemble d'une ou plusieurs offres de coupon ne sont plus disponibles pour l'ordinateur de client intermédiaire de confiance (150) ; et
dans lequel l'ordinateur de client intermédiaire de confiance (150) comprend un client intermédiaire (151), l'ordinateur de client intermédiaire de confiance (150) étant identifié par un identifiant de dispositif et/ou le client intermédiaire (151) étant identifié par un identifiant de client,
dans lequel le client intermédiaire (151) comprend
un moyen de réception, à partir du serveur de distribution de coupons (110), de la liste de coupons qui identifie une première pluralité d'offres de coupon qui sont disponibles pour un ordinateur de client intermédiaire de confiance (150), et de réception des premières données de coupons ;
un moyen de retransmission d'au moins une partie de la première liste de coupons et d'au moins une partie des premières données de coupons à un ou plusieurs dispositifs (120, 130, 161, 162, 163), dans lequel la retransmission comprend le reformatage de la liste de coupons et/ou des premières données de coupons pour qu'elles soient compatibles avec un navigateur propriétaire de coupons et une application d'impression exécutés sur l'un respectif des un ou plusieurs dispositifs (120, 130, 161, 162, 163) ;
un moyen d'envoi du rapport (190) indiquant le nombre de fois où des coupons ont été générés pour les un ou plusieurs dispositifs (120, 130, 161, 162, 163) par le client intermédiaire de confiance (150) ou les un ou plusieurs dispositifs (120, 130, 161, 162, 163) au serveur de distribution de coupons (110) ;
un moyen de réception, à partir du serveur de distribution de coupons (110), de la seconde liste de coupons ;
un moyen de retransmission d'au moins une partie de la seconde liste de coupons aux un ou plusieurs dispositifs (120, 130, 161, 162, 163),
dans lequel la génération de coupons au niveau des un ou plusieurs dispositifs (120, 130, 161, 162, 163) est supervisée par le client intermédiaire de confiance (151) pour le compte du serveur de distribution de coupons (110), et la distribution de coupons aux un ou plusieurs dispositifs comprend la génération de coupons au niveau de l'ordinateur de client intermédiaire de confiance (150) ou au niveau des un ou plusieurs dispositifs (120, 130, 161, 162, 163) ; et
la génération de coupons comprend la génération d'un artéfact de coupon unique sur la base des informations qui sont uniques à l'ordinateur de client intermédiaire de confiance (150) ou aux un ou plusieurs dispositifs (120, 130, 161, 162, 163) ;
dans lequel le serveur de distribution de coupons (110) comprend un moyen de réception de l'identifiant de client et/ou de l'identifiant de dispositif à partir de l'ordinateur de client intermédiaire de confiance (150) et détermine que le client intermédiaire (151) est un client autorisé en déterminant que l'identifiant de client et/ou l'identifiant de dispositif est connu et contient des informations qui indiquent une clé de déchiffrement et en examinant la clé de déchiffrement associée à l'identifiant de client et/ou à l'identifiant de dispositif, la clé de déchiffrement correspondant à une clé de chiffrement fournie précédemment à l'ordinateur de client intermédiaire de confiance (150).

2. Système (100) selon la revendication 1, dans lequel l'ordinateur de client intermédiaire de confiance (150) comprend en outre :
un moyen de réception, à partir de chaque dispositif (120, 130, 161, 162, 163) des un ou plusieurs dispositifs (120, 130, 161, 162, 163), d'un ou plusieurs rapports de dispositif indiquant un nombre de fois où le dispositif a généré un ou plusieurs coupons pour une ou plusieurs de la première pluralité d'offres de coupon,
un moyen d'agrégation des un ou plusieurs rapports de dispositif pour produire un rapport d'ordinateur de client intermédiaire de confiance (190) qui indique au moins, pour une ou plusieurs offres de la première pluralité d'offres de coupon, un nombre de fois où les un ou plusieurs dispositifs (120, 130, 161, 162, 163) ont généré des coupons pour l'offre depuis que l'ordinateur de client intermédiaire de confiance (150) a envoyé son dernier rapport au serveur de distribution de coupons ;
un moyen d'envoi du rapport d'ordinateur de client intermédiaire de confiance (190) au serveur de distribution de coupons (110).

3. Système (100) selon la revendication 1 ou 2, dans lequel
le serveur de distribution de coupons (110) ne reçoit pas de requêtes pour générer les coupons à partir de l'ordinateur de client intermédiaire de confiance (150) ou des un ou plusieurs dispositifs (120, 130, 161, 162, 163) ; et/ou les premières données de coupons (195) ne comprennent pas d'image complète du coupon qui est généré par l'ordinateur de client intermédiaire de confiance (150) ou les un ou plusieurs dispositifs (120, 130, 161, 162, 163) pour au moins une offre de coupon.

4. Système (100) selon les revendications 1 à 3, dans lequel
le rapport indique en outre le nombre de fois où des coupons pour au moins une seconde offre de coupon des une ou plusieurs offres de coupon ont été générés par les un ou plusieurs dispositifs (120, 130, 161, 162, 163) depuis que l'ordinateur de client intermédiaire de confiance (150) a envoyé son dernier rapport au serveur de distribution de coupons (110), dans lequel la première offre de coupon est différente de la seconde offre de coupon.

5. Système (100) selon les revendications 1 à 4, dans lequel
la seconde liste de coupons indique que la première offre de coupon n'est plus disponible ; et/ou la seconde liste de coupons indique qu'une seconde offre de coupon est à présent disponible, dans lequel la première liste de coupons n'indiquait pas que la seconde offre de coupon était disponible.

6. Système (100) selon les revendications 1 à 5, dans lequel le serveur de distribution de coupons (110) comprend en outre :
un moyen de stockage d'un compte du nombre de fois où des coupons ont été générés pour la première offre de coupon ; et
un moyen de mise à jour de son compte pour inclure le nombre de fois où des coupons pour la première offre de coupon ont été générés par les un ou plusieurs dispositifs (120, 130, 161, 162, 163) sur la base du rapport (190) à partir de l'ordinateur de client intermédiaire de confiance (150) ;
un moyen de stockage d'une limite de distribution pour la première offre de coupon ;
un moyen de détermination que la première offre de coupon n'est plus disponible sur la base d'une comparaison du compte mis à jour avec la limite de distribution ;
dans lequel la seconde liste de coupons reflète que la première offre de coupon n'est plus disponible.

7. Système (100) selon les revendications 1 à 6, dans lequel
les un ou plusieurs dispositifs (120, 130, 161, 162, 163) ne sont pas connectés au serveur de distribution de coupons (110) lorsque les un ou plusieurs dispositifs (120, 130, 161, 162, 163) génèrent un coupon pour la première offre de coupon.

8. Système (100) selon les revendications 1 à 7, dans lequel les un ou plusieurs dispositifs (120, 130, 161, 162, 163) comprennent :
un dispositif mobile (130) ; et/ou
une pluralité de dispositifs de kiosque (161, 162, 163) déployés dans un point de vente,
dans lequel l'ordinateur de client intermédiaire de confiance (150) exécute au niveau d'un dispositif autre que les un ou plusieurs dispositifs (120, 130, 161, 162, 163), dans lequel l'ordinateur de client intermédiaire de confiance (150) supervise la génération de coupons au niveau des un ou plusieurs dispositifs (120, 130, 161, 162, 163) par retransmission des données provenant de la première liste de coupons et des premières données de coupons aux un ou plusieurs dispositifs (120, 130, 161, 162, 163).

9. Système (100) selon les revendications 1 à 8, dans lequel chacun des coupons générés pour la première offre de coupon est unique.

10. Système (100) selon les revendications 1 à 9, dans lequel :
l'ordinateur de client intermédiaire de confiance (150) reçoit la seconde liste de coupons en réponse au rapport d'ordinateur de client intermédiaire de confiance (195) ; et/ou
l'ordinateur de client intermédiaire de confiance (150) envoie le rapport d'ordinateur de client intermédiaire de confiance (195) dans le cadre d'un protocole d'envoi périodique de rapports.

11. Procédé comprenant les étapes de :
réception, au niveau d'un serveur de distribution de coupons (110), d'informations définissant au moins un premier ensemble d'une ou plusieurs offres de coupon à partir d'un ou plusieurs fournisseurs de coupons (190),
identification, au niveau du serveur de distribution de coupons (110), du premier ensemble d'une ou plusieurs offres de coupon qui est disponible pour un ordinateur de client intermédiaire de confiance (150),
envoi, par le serveur de distribution de coupons (110) à un ordinateur de client intermédiaire de confiance (150), d'une première liste de coupons identifiant les une ou plusieurs offres de coupon et des premières données de coupons (195) comprenant des données nécessaires pour que le client intermédiaire de confiance (150) ou pour que les un ou plusieurs dispositifs (120, 130, 161, 162, 163) génèrent des coupons pour chacune des une ou plusieurs offres de coupon ;
après l'envoi de la première liste de coupons, réception, au niveau du serveur de distribution de coupons (110), d'un rapport (191) à partir de l'ordinateur de client intermédiaire de confiance (150), dans lequel le rapport indique un nombre de fois où des coupons pour au moins une première offre de coupon des une ou plusieurs offres de coupon ont été générés pour les un ou plusieurs dispositifs (120, 130, 161, 162, 163) par le client intermédiaire de confiance (150) ou les un ou plusieurs dispositifs (120, 130, 161, 162, 163) depuis que l'ordinateur de client intermédiaire de confiance (150) a envoyé son dernier rapport au serveur de distribution de coupons (110) ;
envoi, à partir du serveur de distribution de coupons (110) à l'ordinateur de client intermédiaire de confiance (150), d'une seconde liste de coupons qui indique quelles offres de coupon dans le premier ensemble d'une ou plusieurs offres de coupon ne sont plus disponibles pour l'ordinateur de client intermédiaire de confiance (150) ; dans lequel l'ordinateur de client intermédiaire de confiance (150) comprend un client intermédiaire (151), l'ordinateur de client intermédiaire de confiance (150) étant identifié par un identifiant de dispositif et/ou le client intermédiaire (151) étant identifié par un identifiant de client, dans lequel le procédé comprend en outre
la réception, au niveau du client intermédiaire (151) à partir du serveur de distribution de coupons (110), de la liste de coupons qui identifie une première pluralité d'offres de coupon qui sont disponibles pour l'ordinateur de client intermédiaire de confiance (150), et la réception des premières données de coupons ;
la retransmission, au niveau du client intermédiaire (151), d'au moins une partie de la première liste de coupons et d'au moins une partie des premières données de coupons à un ou plusieurs dispositifs (120, 130, 161, 162, 163), dans lequel la retransmission comprend le reformatage de la liste de coupons et/ou des premières données de coupons pour qu'elles soient compatibles avec un navigateur propriétaire de coupons et une application d'impression exécutés sur l'un respectif des un ou plusieurs dispositifs (120, 130, 161, 162, 163) ;
l'envoi, au niveau du client intermédiaire (151), du rapport (190) indiquant le nombre de fois où des coupons ont été générés pour les un ou plusieurs dispositifs (120, 130, 161, 162, 163) par le client intermédiaire de confiance (150) ou les un ou plusieurs dispositifs (120, 130, 161, 162, 163) au serveur de distribution de coupons (110) ;
la réception, au niveau du client intermédiaire (151) à partir du serveur de distribution de coupons (110), de la seconde liste de coupons ;
la retransmission, au niveau du client intermédiaire (151), d'au moins une partie de la seconde liste de coupons aux un ou plusieurs dispositifs (120, 130, 161, 162, 163),
dans lequel la génération de coupons au niveau des un ou plusieurs dispositifs (120, 130, 161, 162, 163) est supervisée par le client intermédiaire de confiance (150) pour le compte du serveur de distribution de coupons (110), et la distribution de coupons aux un ou plusieurs dispositifs comprend la génération de coupons au niveau de l'ordinateur de client intermédiaire de confiance (150) ou au niveau des un ou plusieurs dispositifs (120, 130, 161, 162, 163) ; et la génération de coupons comprend la génération d'un artéfact de coupon unique sur la base des informations qui sont uniques à l'ordinateur de client intermédiaire de confiance (150) ou aux un ou plusieurs dispositifs (120, 130, 161, 162, 163),
la réception, au niveau du serveur de distribution de coupons, de l'identifiant de client et/ou de l'identifiant de dispositif à partir de l'ordinateur de client intermédiaire de confiance (150) et la détermination que le client intermédiaire (151) est un client autorisé en déterminant que l'identifiant de client et/ou l'identifiant de dispositif contient des informations qui indiquent une clé de déchiffrement et en examinant la clé de déchiffrement associée à l'identifiant de client et/ou à l'identifiant de dispositif, la clé de déchiffrement correspondant à une clé de chiffrement fournie précédemment à l'ordinateur de client intermédiaire de confiance (150).

12. Un ou plusieurs supports de stockage lisibles par ordinateur stockant des instructions qui, lorsqu'elles sont exécutées par un ou plusieurs dispositifs informatiques, entraînent la mise en oeuvre du procédé selon la revendication 11.
